# EUROPÄISCHE PATENTSCHRIFT

(11) **EP 3 720 726 B1**
(45) Veröffentlichungstag und Bekanntmachung des Hinweises auf die Patenterteilung: **24.01.2024**
(21) Anmeldenummer: 18815148.4
(22) Anmeldetag: 03.12.2018
(51) Int. Cl.: B60H 1/00, B60H 1/22, F24H 3/04

(54) **HEIZMODUL FÜR EINE HEIZANLAGE EINES BEWOHNBAREN FAHRZEUGS**
HEATING MODULE FOR A HEATING SYSTEM OF A HABITABLE VEHICLE
MODULE DE CHAUFFAGE POUR SYSTÈME DE CHAUFFAGE D'UN VÉHICULE HABITABLE

(30) Priorität: 06.12.2017 DE 102017129031
(43) Veröffentlichungstag der Anmeldung: 14.10.2020
(73) Patentinhaber: Truma Gerätetechnik GmbH & Co. KG, 85640 Putzbrunn (DE)
(72) Erfinder: POHLMÜLLER, Adam, 85622 Feldkirchen (DE); PIEGSA, Siegfried, 85640 Putzbrunn (DE); ERDOGAN, Fikret, 85540 Haar (DE); ÜNNÜ, Kamil, 81539 München (DE); MÖHRING, Mario, 82054 Sauerlach (DE); LAGING, Johannes, 81829 München (DE); DÖMÖTÖR, Mihai, 81549 München (DE)
(74) Vertreter: Müller Hoffmann & Partner
(86) Internationale Anmeldenummer: PCT/EP2018/083348
(87) Internationale Veröffentlichungsnummer: WO 2019/110506

(56) Entgegenhaltungen:
- WO-A1-2008/043343
- DE-A1- 1 579 775
- DE-A1- 10 016 642
- DE-A1-102010 060 446
- DE-A1-102013 001 441
- DE-B- 1 079 808
- DE-B3-102014 215 682
- DE-T5-112015 001 472
- GB-A- 2 322 103
- KR-B1- 101 715 575
- US-A- 4 142 413
- US-A- 4 520 844
- US-A- 5 476 012
- US-A1- 2008 032 618
- US-A1- 2009 239 463

## Beschreibung

Die Erfindung betrifft ein Heizmodul für eine Heizanlage eines bewohnbaren Fahrzeugs.

Unter dem Begriff bewohnbares Fahrzeug werden alle Arten von angetriebenen oder nicht angetriebenen Fahrzeugen verstanden, in denen eine Person oder mehrere Personen auch wohnen kann bzw. können. Bei solchen bewohnbaren Fahrzeugen handelt es sich insbesondere um Wohnmobile, Wohnwagen oder Schiffe bzw. Boote.

Bisherige Heizanlagen für bewohnbare Fahrzeuge basieren auf dem Prinzip, dass von einer in der Regel zentralen Heizung aus, erwärmte Luft in den bewohnbaren Raum austritt bzw. über ein System von Rohren oder Schläuchen an unterschiedliche Stellen im bewohnbaren Raum verteilt wird. Üblicherweise sind in dieser Heizung ein Heizaggregat (elektrisch oder mit Gas betrieben) und ein Gebläse untergebracht. Um eine entsprechende Heizleistung gewährleisten zu können, sind für einen größeren bewohnbaren Raum entsprechend auch leistungsstärkere und damit in der Regel von ihren Dimensionen her größere Heizungen erforderlich.

Aus der DE 10 2013 001 441 A1 ist eine Heizungsanordnung zum Aufheizen eines die Heizungsanordnung durchströmenden Mediums bekannt, mit einem Gehäuse mit einem ersten und einem zweiten Gehäuseteil. In dem Gehäuse ist eine Heizbaugruppe angeordnet.

Die DE 10 2010 060 446 A1 offenbart einen elektrischen Heizer mit einem ein Fluid führenden Gehäuse, in dem ein wendelförmiger Heizkörper aufgenommen ist.

Der Erfindung liegt die Aufgabe zu Grunde, ein flexibel einsetzbares Heizmodul für eine Heizanlage bereitzustellen, das einen geringen Platzbedarf aufweist und funktionstechnisch in die Heizanlage integrierbar ist.

Diese Aufgabe wird gelöst durch ein elektrisches Heizmodul gemäß dem unabhängigen Anspruch 1. Mögliche Ausgestaltungen des Heizmoduls sind in den abhängigen Ansprüchen enthalten.

Es wird ein Heizmodul für eine Heizanlage für ein bewohnbares Fahrzeug bereitgestellt mit:
- einem Modulgehäuse mit einer Lufteintrittsöffnung und einer Luftaustrittsöffnung,
- einem im Modulgehäuse aufgenommenen Luftführungselement, das mehrere Führungsabschnitte aufweist und das mit der Lufteintrittsöffnung und der Luftaustrittsöffnung verbunden ist, und
- wenigstens einem Heizelement, wobei das Heizelement dazu eingerichtet ist, Luft, die von der Lufteintrittsöffnung zur Luftaustrittsöffnung strömt, zu erwärmen.

Das Heizmodul erlaubt in einer Ausgestaltung die Verbindung mit weiteren Komponenten, sodass sich insgesamt eine Heizanlage ergibt.

Ein derartiges Heizmodul, das insbesondere keine eigene Gebläsevorrichtung aufweist, kann flexibel in einer Heizanlage eingebaut und eingesetzt werden. Dabei ist der Platzbedarf des Heizmoduls sehr gering.

Die Lufteintrittsöffnung kann dazu eingerichtet sein, mit einer von dem Heizmodul gesonderten Gebläsevorrichtung verbindbar zu sein.

In einer alternativen Ausgestaltung handelt es sich bei dem Heizmodul um eine eigenständige Heizung. Hierfür verfügt das Heizmodul in einer Ausgestaltung vorzugsweise über eine Gebläsevorrichtung.

Das Heizmodul weist eine Sensorvorrichtung auf, die dazu eingerichtet ist, die Temperatur der das Heizmodul durchströmenden Luft zu erfassen.

Ferner kann das Heizmodul eine Steuervorrichtung aufweisen, die dazu eingerichtet ist, das Heizmodul anzusteuern. Dabei kann die Steuervorrichtung eine Schnittstelle aufweisen, die dazu eingerichtet ist, eine Kommunikationsverbindung zu einem von dem Heizmodul gesonderten Gerät bereitzustellen.

Durch die Steuervorrichtung mit ihrer Schnittstelle kann das Heizmodul auch steuertechnisch in eine Heizanlage integriert werden.

Die Sensorvorrichtung kann bezogen auf einen Strömungsquerschnitt des Heizmoduls in einem zentralen Bereich eines Luftführungselements angeordnet sein. Hierdurch wird insbesondere der Bereich eines erwärmten Luftstroms gemessen, in dem verteilt über den Strömungsquerschnitt üblicherweise die höchste Temperatur herrscht, sodass die Abgabe von zu stark erwärmter Luft zuverlässig ausgeschlossen werden kann. Dies ermöglicht insbesondere, die Gefahr von Hitzeschäden an Bauteilen des Fahrzeugs oder von Verletzungen von Personen zu verhindern.

Eine Abweichung der Position der Sensorvorrichtung relativ zu einer Mitte des Strömungsquerschnitts kann kleiner oder gleich 20% eines Durchmessers des Luftführungselements betragen. Ferner kann die Sensorvorrichtung entlang einer - vorzugsweise zentrischen - Längsachse des Luftführungselements angeordnet sein. Die im Wesentlichen mittige Anordnung bezüglich des Querschnitts bzw. entlang der Längsachse dient dem Zweck, dass das Heizmodul mit unterschiedlichen Einbaulagen (damit auch unterschiedlichen Drehlagen relativ zur Erdanziehung) verbaut werden kann, wobei die Sensorvorrichtung jeweils zuverlässig misst. Wäre die Sensorvorrichtung beispielsweise nicht mittig, sondern näher an einer Wandung angeordnet, so würde die Sensorvorrichtung gegebenenfalls zeitlich später reagieren, wenn die Wandung weiter vom Erdschwerefeld entfernt und die Luft somit "tiefer" unten stehen würde.

In einer Ausgestaltung befindet sich die Sensorvorrichtung innerhalb eines Rezirkulationsgebiets eines Verdrängerelements. Das Verdrängerelement verdrängt somit die Luft radial nach außen und die Sensorvorrichtung befindet sich in dem Bereich, in welchem die verdrängte Luft wieder zurückströmt.

In einer ergänzenden oder alternativen Ausgestaltung befindet sich die Sensorvorrichtung in einem Querschnitt des Verdrängerelements oder in einer Projektion des Querschnitts, also z. B. in der geometrischen Verlängerung des Querschnitts. Insbesondere befindet sich die Sensorvorrichtung in einer Luftströmungsrichtung hinter dem Verdrängerelement.

Das Verdrängerelement kann so ausgestaltet sein, dass es Luft um die Sensorvorrichtung leitet, sodass durch das Verdrängerelement umgelenkte Luft die Sensorvorrichtung erreicht. Weiterhin kann vorgesehen sein, dass nur die umgelenkt Luft die Sensorvorrichtung erreicht. Hierdurch wird somit ein direkter Kontakt der Sensorvorrichtung mit der eigentlichen Luftströmung vermieden.

Das Luftführungselement weist die folgenden Teile bzw. Führungsabschnitte auf:
- einen ersten Führungsabschnitt, der mit der Lufteintrittsöffnung verbunden ist,
- einen zweiten Führungsabschnitt, der mit der Luftaustrittsöffnung verbunden ist, und
- einen dritten Führungsabschnitt, der zwischen dem ersten und dem zweiten Führungsabschnitt aufgenommen und mit diesen verbunden ist.

Das Luftführungselement bildet sozusagen ein Innengehäuse des Modulgehäuses.

Dabei kann das Luftführungselement in Bezug auf das Strömen von Luft optimiert werden, insbesondere hinsichtlich seiner Form bzw. seines Querschnitts. Das Luftführungselement kann im Querschnitt insbesondere kreisförmig oder ellipsenförmig ausgebildet sein. Das Modulgehäuse kann hiervon unabhängig eine andere äußere Gestaltung aufweisen, insbesondere kann das Modulgehäuse im Wesentlichen ebene Außenflächen aufweisen, die den Einbau entlang von in der Regel ebenen Fahrzeugstrukturen, wie Wänden, Verkleidungen, Boden und dergleichen vereinfacht.

Die Führungsabschnitte können als rohrartige Bauteile ausgebildet sein. Dabei kann jeder Führungsabschnitt ein in sich stabiles Bauteil sein. Die Führungsabschnitte können an ihren betreffenden Enden miteinander verbunden werden, wobei die Führungsabschnitte insbesondere so ausgebildet werden können, dass der erste Führungsabschnitt und der zweite Führungsabschnitt mittels einer Formschlussverbindung, wie etwa Steckverbindung oder Rastverbindung, mit dem dritten Führungsabschnitt gekoppelt sind. Denkbar sind aber auch andere Verbindungsarten wie etwa eine Gewindeverbindung, bei der an einem Führungsabschnitt ein kurzes Außengewinde vorgesehen ist und an dem anderen Führungsabschnitt ein korrespondierendes Innengewinde. Ferner können die Führungsabschnitt bei Bedarf auch materialschlüssig miteinander verbunden sein, etwa durch eine Verklebung.

Das Heizelement des Heizmoduls ist in Strömungsrichtung hinter dem ersten Führungsabschnitt angeordnet. Erfindungsgemäß ist das Heizelement in dem dritten Führungsabschnitt aufgenommen. Das Heizmodul kann somit in der Regel sehr einfach und platzsparend eingebaut werden, da lediglich ein Anschluss an eine Energiequelle, beispielsweise Stromanschluss, vorgesehen werden muss. Ferner kann das Heizmodul auch einfach in eine bestehende Heizanlage integriert werden. Dabei ist es besonders vorteilhaft, dass das Heizmodul passiv von Luft durchströmt wird, d.h. das Heizmodul selbst verfügt nicht über ein eingebautes Gebläse.

Gemäß einer Ausgestaltung kann das Luftführungselement in Bezug auf eine zur Strömungsrichtung orthogonalen Mittelebene im Wesentlichen symmetrisch ausgebildet ist, sodass das Heizmodul beim Einbau in eine Heizanlage beliebig ausgerichtet sein kann. Dabei können insbesondere der erste Führungsabschnitt und der zweite Führungsabschnitt im Wesentlichen gleichartig oder identisch ausgebildet sein.

Ein Strömungskanal des Luftführungselements kann querschnittssymmetrisch ausgebildet sein. Dies ermöglicht insbesondere ein beliebig verdrehtes Einbauen des Heizmoduls, insbesondere verdreht in Relation zu Rohr- oder Schlauchanschlüssen oder verdreht in Relation zu einem Strukturbauteil des Fahrzeugs, wie etwa eine Wand oder ein Boden.

Bei dem Heizmodul ist die Sensorvorrichtung in einer Sensoraufnahme angeordnet, die durch mehrere Stege gehalten ist, wobei die Stege an dem zweiten Führungsabschnitt oder an dem ersten Führungsabschnitt vorgesehen sind und sich im Wesentlichen in radialer Richtung von der Sensoraufnahme aus erstrecken. Dabei wird mit der Erstreckung in radialer Richtung insbesondere beschrieben, dass die Stege von radial innen nach radial außen verlaufen bezogen auf einen beispielsweise kreisförmigen Führungsabschnitt. Der Begriff Erstreckung in radialer Richtung soll aber nicht definieren, ob der Steg exakt geradlinig dem Radius folgt oder ob der Steg ggf. leicht geneigt zum Radius oder bogenförmig bzw. geschwungen ausgebildet ist.

Einige oder alle Stege weisen einen Luftführungskanal auf, der so ausgebildet ist, durchströmende Luft in Richtung der Sensorvorrichtung zu leiten. Hierdurch kann aus unterschiedlichen Bereichen des insbesondere erwärmten Luftstroms Luft zum Sensor geführt werden. Im Bereich des Sensors wird die Luft aus den unterschiedlichen Strömungsbereichen gemischt, sodass gegebenenfalls Temperaturunterschiede in den verschiedenen Strömungsbereichen etwas ausgeglichen werden. Entsprechend kann hierdurch gewährleistet werden, dass die Sensorvorrichtung eine gemittelte Temperatur des erwärmten Luftstroms misst bzw. erfasst.

Einige oder alle Stege können aus einem temperaturleitfähigen Material bestehen. Vorzugsweise hat das verwendete Material eine Wärmeleitfähigkeit größer oder gleich 15 W/(m * K). Denkbar ist beispielsweise, dass die Stege als Kupferstege ausgebildet sind, die eine Art Stern bilden.

Die Sensorvorrichtung kann im dritten Führungsabschnitt angeordnet sein, wobei ein Steg die Sensorvorrichtung hält.

Ferner kann die Sensorvorrichtung als Sicherung - vorzugsweise als Schmelzsicherung - ausgebildet sein, die auf das Überschreiten einer Temperatur reagiert.

Die Sensorvorrichtung kann mindestens zwei entlang einer Längsachse des Luftführungselements axial voneinander beabstandete Temperatur-Sicherungen aufweisen.

In einer Ausgestaltung verfügt das Heizelement über mehrere separate Heizkomponenten, z. B. separate Heizwendeln. Jeder der Heizkomponente ist dabei eine Temperatur-Sicherung zugeordnet.

Das Heizmodul kann ein Verdrängerelement aufweisen, das dazu eingerichtet ist, durchströmende Luft nach radial außen zu verdrängen. Dabei kann das Verdrängerelement mit der Sensoraufnahme verbunden sein. Ferner kann das Verdrängerelement dazu eingerichtet sein, den Hauptstrom von erwärmter Luft um die Sensorvorrichtung zu leiten. Durch das Verdrängerelement wird gewährleistet, dass die Sensorvorrichtung nicht direkt bzw. unmittelbar mit dem Hauptstrom der erwärmten Luft in Kontakt kommt. Vielmehr wird die erwärmte Luft zunächst um das Verdrängerelement und die Sensorvorrichtung herumgeführt und anschließend mittels der oben erwähnten Luftführungskanälen in den Stegen zur Sensorvorrichtung geleitet. Dabei strömt die umgeleitete Luft im Wesentlichen von radial außen nach radial innen zur Sensorvorrichtung. Die Sensorvorrichtung kann in Bezug auf die Luftführungskanäle in den Stegen bezogen auf die Hauptströmungsrichtung auch stromaufwärts angeordnet sein. Hierdurch kann die Durchmischung von Luft, deren Temperatur erfasst wird, noch verbessert werden.

In einer Ausgestaltung befindet sich die Sensorvorrichtung in dem Rezirkulationsgebiet hinter einem Verdrängerelement. Das Verdrängerelement verdrängt somit die Luft nach radial außen und in dem Gebiet, in welchen die Luft wieder zurückströmt, befindet sich die Sensorvorrichtung, sodass in diesem Gebiet auch die Temperaturmessung stattfindet.

Das Verdrängerelement kann auch eine durchgehende Aussparung zum Führen von Luft aufweisen. In einer Ausgestaltung wird beispielsweise die Luft in der Aussparung entgegen der Strömungsrichtung im Strömungskanal - also von der Lufteintrittsöffnung zur Luftaustrittsöffnung - und damit gleichsam zurück geführt. Die Luft in der Aussparung strömt somit von der Richtung der Luftaustrittsöffnung in die Richtung der Lufteintrittsöffnung. In einer Ausgestaltung befindet sich eine Sensorvorrichtung innerhalb der Aussparung.

Eine Außenseite des Verdrängerelements und die Innenseite des Luftführungselements können einen ringförmigen Strömungskanalabschnitt begrenzen. Dabei kann insbesondere durch die Dimensionierung des Verdrängerelements Einfluss auf die Ausgestaltung des ringförmigen Strömungsquerschnitts genommen werden. Dabei kann durch eine Verengung des Strömungsquerschnitts auch eine Art Düsenwirkung erzeugt werden, sodass die erwärmte Luft in Richtung der Luftaustrittsöffnung etwas beschleunigt wird.

Das Verdrängerelement kann in Strömungsrichtung zwischen der Heizwendel und der Luftaustrittsöffnung angeordnet sein. Das heißt, dass das Verdrängerelement nur in einem Teil des Strömungsquerschnitts des Heizmoduls wirksam ist. Insbesondere kann das Verdrängerelement als halbkugelförmige oder paraboloidförmige Abdeckung ausgeführt sein. Eine solche Abdeckung kann stromaufwärts der Sensorvorrichtung angeordnet sein und die Sensorvorrichtung vor der direkten Luftströmung schützen.

Alternativ hierzu kann das Verdrängerelement in Strömungsrichtung zwischen der Lufteintrittsöffnung und der Luftaustrittsöffnung angeordnet sein und von Windungen der Heizwendel oder allgemein den aktiven Komponenten eines Heizelements umgeben sein. In einer solchen Ausgestaltung erstreckt sich das Verdrängerelement im Wesentlichen über die gesamte Länge des Luftführungselements, insbesondere erstreckt es sich über die gesamte Länge des dritten Führungsabschnitts. Dabei ist der Strömungsquerschnitt über beinahe die gesamte Länge des Heizmoduls ringförmig ausgebildet.

Das Heizelement kann als elektrisches Heizelement ausgestaltet sein. Dabei kann das Heizelement wenigstens eine Heizwendel mit mehreren Windungen aufweisen.

Das Heizmodul bzw. das elektrische Heizelement kann zwei Heizwendeln aufweisen, die in Strömungsrichtung nacheinander angeordnet sind. Die beiden Heizwendeln können bevorzugt einzeln angesteuert werden. Alternativ werden beide Heizwendeln gleich angesteuert. Das Vorsehen von zwei Heizwendeln ermöglicht insbesondere einen zweistufigen Betrieb des Heizmoduls. Dabei kann bei einer ersten Stufe nur eine Heizwendel aufgeheizt werden. Bei einer zweiten Stufe werden beide Heizwendeln von Strom durchflossen und erhitzt.

Alternativ zu einer sequentiellen Anordnung von zwei Heizwendeln können zwei Heizwendeln auch so angeordnet sein, dass in Strömungsrichtung wiederholt auf eine Windung der einen Heizwendel eine Windung der anderen Heizwendel folgt. In einer solchen Ausgestaltung wechseln sich also die Windungen der beiden Heizwendeln ab. Anders ausgedrückt kann man auch sagen, dass sich die Windungen in Strömungsrichtung überlagern bzw. ineinander verschlungen sind. Auch bei dieser Ausgestaltung ist es möglich, den oben beschriebenen zweistufigen Betrieb zu ermöglichen.

Bei dem Heizmodul können in Strömungsrichtung aufeinander folgende Windungen der gleichen Heizwendel einen sich verändernden Durchmesser aufweisen. Insbesondere kann der Durchmesser von einer Windung zur nächsten (benachbarten) Windung größer oder kleiner werden. Hierdurch kann die Wärmeübertragung auf die durchströmende Luft beeinflusst und optimiert werden. In einer Ausgestaltung ändert sich der Durchmesser stetig in einer Richtung.

Die Steuervorrichtung des Heizmoduls kann in einem am Modulgehäuse angeordneten Zusatzgehäuse untergebracht sein. Dabei kann das Zusatzgehäuse dazu eingerichtet sein, eine zur Steuervorrichtung zugehörige Platine aufzunehmen. Das Zusatzgehäuse ermöglicht einen leichten Zugang zur Steuervorrichtung, um gegebenenfalls deren Austausch oder Konfiguration einfach vornehmen zu können. Ferner kann das Zusatzgehäuse mit ausreichend Lüftungsschlitzen versehen sein, um ein Überhitzen der Steuervorrichtung vermeiden zu können.

Um eine kompakte Bauweise des Heizmoduls zu unterstützen, kann das Zusatzgehäuse so ausgebildet sein, dass es mit einer Außenseite des Modulgehäuses einen Aufnahmeraum für die Steuervorrichtung begrenzt. Dabei wird die Steuervorrichtung also in einem Raum aufgenommen, der von einer Außenseite des Modulgehäuses und im Übrigen vom Zusatzgehäuse gebildet wird. Das Zusatzgehäuse kann dabei auf das Modulgehäuse aufschiebbar oder aufsteckbar sein.

Das Heizmodul kann mindestens ein Umlenkelement aufweisen, das an einem Führungsabschnitt angeordnet ist, der mit der Lufteintrittsöffnung oder der Luftaustrittsöffnung verbunden ist, wobei das Umlenkelement als ein von der Luft durchströmter Ring ausgestaltet ist. Dabei kann das als Ring ausgestaltete Umlenkelement einen in Strömungsrichtung sich ändernden Innendurchmesser aufweisen. Beispielsweise kann der Ring konisch ausgebildet sein, insbesondere sich in Strömungsrichtung konisch aufweiten.

Das Heizmodul kann mehrere Umlenkelemente aufweisen, die an einem Führungsabschnitt angeordnet sind, der mit der Lufteintrittsöffnung oder der Luftaustrittsöffnung verbunden ist. Dabei können die Umlenkelemente eine konstante relative Position zu dem Führungsabschnitt aufweisen. Die Umlenkelemente werden somit in einer Ausgestaltung nicht relativ zum Modulgehäuse bewegt, sondern sind statisch fixiert. Ferner können die Umlenkelemente entlang eines Kreises angeordnet sein, sodass ein Umlenkkranz gebildet ist. Die Umlenkelemente dienen insbesondere dazu, die geförderte Luft im Heizmodul so zu verteilen bzw. strömen zu lassen, dass eine optimale Wärmeübertragung im Bereich der Heizwendel erfolgen kann. Ferner führen die Umlenkelemente zu einer verbesserten Durchmischung der beim Heizmodul ankommenden Luft und zu einer anschließend gleichmäßigeren Erwärmung.

Die Umlenkelemente können entlang zweier Kreise angeordnet sein, sodass bezogen auf die Radialrichtung ein innerer Umlenkkranz und einen äußerer Umlenckranz gebildet sind. Dabei kann der innere Umlenkkranz Umlenkelemente aufweisen, die sich von den Umlenkelementen des äußeren Umlenkkranzes in Bezug auf die Umlenkrichtung der Luftströmung unterscheiden. Hierdurch kann insbesondere das Einströmen von Luft in das Heizmodul optimiert werden.

Das als Ring ausgestaltete Umlenkelement kann auch als Träger von in dem Kreis angeordneten Umlenkelementen fungieren.

Das Umlenkelement oder die mehreren Umlenkelemente können in einer Adaptervorrichtung angeordnet sein, die reversibel mit der Lufteintrittsöffnung des Modulgehäuses verbindbar ist. Hierdurch kann die Umlenkung oder die Messung somit auch durch Komponenten geschehen, die durch den Adapter aufsteckbar sind. Daher ließen sich z. B. zwei Heizeinheiten hintereinander stecken und am Ein- und Ausgang würden jeweils die Adapter angebracht werden.

Ferner kann das Umlenkelement oder die mehreren Umlenkelemente einen mittigen Abschnitt umgeben, der eine direkte axiale Richtströmung erlaubt. Ein solcher mittiger Abschnitt würde in Bezug auf den Strömungsquerschnitt eine freie Aussparung bilden, durch die Luft im Wesentlichen ungehindert strömen kann.

Je nach Ausgestaltung kann die Adaptervorrichtung dem Anschluss von beispielsweise Komponenten oder Rohren an das Heizmodul dienen. In anderen Ausgestaltung kann die Adaptervorrichtung auch über Bauteile verfügen, die eine zusätzliche Funktion übernehmen. Dies ist beispielsweise eine Homogenisierung des Luftstroms über wenigstens ein Umlenkelement und/oder das Ermitteln einer Temperatur, wobei über wenigstens ein Verdrängerelement eine Mischung von unterschiedlichen Temperaturfeldern bewirkt wird. Diese Adaptervorrichtungen mit einer zusätzlichen Funktionalität erlauben beispielsweise den modularen Zusammenbau des Heizmoduls oder einer Kombination von mehreren Heizmodulen.

Das Vorsehen von Umlenkelementen im Bereich der Lufteintrittsöffnung bzw. im Bereich des ersten Führungsabschnitts des Luftführungselements hat auch den Vorteil, dass das Heizmodul mit unterschiedlichen vorgeschalteten Gebläsevorrichtungen oder sonstigen Anlagekomponenten gekoppelt werden kann. Durch die Umlenkelemente wird zum Heizmodul geförderte Luft in jedem Fall so geleitet bzw. umgelenkt, dass eine für das Heizmodul und das Erwärmen der Luft verbesserte Luftströmung im Luftführungselement erzeugt werden kann.

In einer Ausgestaltung ist wenigstens eine Luftführungskomponente - vorzugsweise in Form eines Rohrbogens - für eine Homogenisierung einer Strömung einer in der Luftführungskomponente geführten Luft vorhanden. In dieser Ausgestaltung wird beispielsweise die Funktion der Homogenisierung der Luftströmung, wie sie im ersten Führungsabschnitt erfolgt, nach außen in den Bereich der Luftführungskomponente hinein verlängert. Die Homogenisierung der Luftströmung - insbesondere über den Strömungsquerschnitt - dient wiederum dem Zweck, dass das Erhitzen der Luft effektiver erfolgt.

In einer Ausgestaltung kann die Luftführungskomponente über wenigstens einen Rohrbogen mit Bogenabschnitten verfügen. Die Bogenabschnitte begrenzen dabei Bahnen in dem Rohrbogen. Weiterhin dienen die Bahnen der Führung von Luft. Der Rohrbogen kann dabei gestreckt ausgeführt sein oder einen Winkel umfassen.

Der Rohrbogen als ein Ausführungsbeispiel für die Luftführungskomponente dient allgemein der Erzeugung einer im Wesentlichen gleichmäßigen Luftströmung, indem ein Luftstrom, der in den Rohrbogen eintritt, gleichsam aufgeteilt und durch die einzelnen Bahnen geführt wird.

Weiterhin kann in einer weiteren Ausgestaltung die Luftführungskomponente mit der Lufteintrittsöffnung oder der Luftaustrittsöffnung verbindbar oder verbunden sein.

Das erste Heizmodul kann in einer Ausgestaltung sowohl unmittelbar als auch über eine Adaptervorrichtung mit mindestens einer separaten Entität - beispielsweise einer Gebläsevorrichtung oder einer allgemeinen Anlagenkomponente oder einem Rohr oder einem Schlauch oder einem Rohrbogen - oder mit mindestens zwei unterschiedlichen separaten Entitäten verbindbar sein, sodass eine Umlenkung von Luft in einem Führungsabschnitt des ersten Heizmoduls und in der unmittelbar oder über die Adaptervorrichtung mit dem ersten Heizmodul verbundenen Entität stattfindet. Als Teil der Heizanlage ist das erste Heizmodul entsprechend mit der separaten Entität verbunden. Das erste Heizmodul oder speziell das Gehäuse des ersten Heizmoduls kann somit derartig ausgestaltet sein, dass die Lufteintrittsöffnung und/oder die Luftaustrittsöffnung es erlaubt, dass - je nach Anwendung des Heizmoduls - eine unmittelbare oder eine mittelbare Verbindung mit einer separaten Entität vorgenommen wird. In einer Erweiterung kann auch eine solche mittelbare bzw. unmittelbare Verbindung mit zwei unterschiedlichen Entitäten (z. B. einer Vorrichtung mit Gebläse und einem Rohr) stattfinden. Die jeweilige Öffnung erlaubt also einen unmittelbaren Verbund und eine Verbindung über eine Adaptervorrichtung. Die separate Entität ist beispielsweise eine Gebläsevorrichtung oder eine sonstige, ggf. aktive Anlagenkomponente (z. B. eine Heizung oder eine Klimaanlage). Alternativ kann die separate Entität jedoch auch hauptsächlich der Führung von Luft dienen, insofern es sich um ein Rohr oder um einen Schlauch handelt. Die Verbindung soll dabei derartig sein und verfügt das erste Heizmodul dabei über eine solche Beschaffenheit, dass die Umlenkung der Luft - insbesondere für den Zweck der Homogenisierung der Luft - sowohl in einem Führungsabschnitt des ersten Heizmoduls (insbesondere dem ersten oder zweiten Führungsabschnitt) als auch in der angeschlossenen Entität stattfindet. In dieser Ausgestaltung wird somit eine separate Komponente oder ein separates Bauteil für eine Funktion des Heizmoduls eingebunden und verwendet, sodass die Funktion der Umlenkung bzw. Homogenisierung der Luft aus dem ersten Heizmodul herausgeführt wird.

Das oben beschriebene Heizmodul kann in einer nachfolgend beschriebenen Heizanlage als erstes Heizmodul eingesetzt werden. Sofern nachfolgend der Begriff "Heizmodul" alleine verwendet wird, ist er im Zusammenhang mit der Beschreibung der Heizanlage als "erstes Heizmodul" zu verstehen. Insoweit werden mit den Begriffen "Heizmodul" alleine und "erstes Heizmodul" die gleichen Teile beschrieben, wohingegen der Begriff "zweites Heizmodul" ein anderes Bauteil beschreibt. Die Heizanlage kann die nachfolgend aufgeführten Merkmale aufweisen.

Eine Heizanlage für ein bewohnbares Fahrzeug kann bereitgestellt werden mit:
- einem ersten Heizmodul, das in einem ersten Modulgehäuse aufgenommen ist, wobei das erste Heizmodul eine Lufteintrittsöffnung und eine Luftaustrittsöffnung aufweist,
- einer von dem ersten Heizmodul gesonderten Gebläsevorrichtung, die in einem zweiten Modulgehäuse aufgenommen ist,

wobei die Gebläsevorrichtung und das erste Heizmodul mittels einer Verbindungsanordnung luftströmungstechnisch miteinander verbunden sind, und
wobei die Gebläsevorrichtung relativ zu dem ersten Heizmodul deart angeordnet ist, dass von der Gebläsevorrichtung geförderte Luft bei der Lufteintrittsöffnung in das erste Heizmodul eintritt, das erste Heizmodul durchströmt und bei der Luftaustrittsöffnung das erste Heizmodul wieder verlässt.

Bei der Gebläsevorrichtung kann es sich um eine eigenständige Gebläsevorrichtung oder um einen Teil einer Heizeinheit oder einer Klimaanlageneinheit handeln.

Bei einer solchen Heizanlage sind die einzelnen Komponenten als Module verfügbar und können je nach verfügbarem Bauraum an unterschiedlichen Stellen eingebaut werden.

Die Gebläsevorrichtung kann stromaufwärts von dem ersten Heizmodul angeordnet sein.

In einer Ausgestaltung kann die Heizungsanlage zusätzlich über eine mit dem ersten Heizmodul und der Gebläsevorrichtung drahtlos oder drahtgebunden verbundenen Steuervorrichtung verfügen, die dazu eingerichtet ist, das erste Heizmodul und die Gebläsevorrichtung anzusteuern.

Durch die für eine solche modulare Heizanlage vorgesehene Steuereinrichtung können die verschiedenen Module bzw. Komponenten der Heizanlage einfach angesteuert bzw. geregelt werden, auch wenn die Module bzw. Komponenten entfernt voneinander angeordnet sein sollten.

Bei der Heizanlage weist das erste Heizmodul eine Sensorvorrichtung auf, die dazu eingerichtet ist, die Temperatur der das erste Heizmodul durchströmenden Luft zu erfassen. Hierdurch kann insbesondere die Temperatur der aus dem Heizmodul austretenden Luft erfasst werden, sodass diese beim Austritt in den bewohnbaren Raum nicht zu heiß ist. Dies ermöglicht insbesondere, die Gefahr von Hitzeschäden an Bauteilen des Fahrzeugs oder von Verletzungen von Personen zu verhindern.

Das erste Heizmodul weist ein im ersten Modulgehäuse aufgenommenes Luftführungselement auf, das mehrere miteinander verbundene Führungsabschnitte aufweist, die zwischen der Lufteintrittsöffnung und der Luftaustrittsöffnung hintereinander angeordnet sind. Das Luftführungselement bildet sozusagen ein Innengehäuse des Modulgehäuses. Dabei kann das Luftführungselement in Bezug auf das Strömen von Luft optimiert werden, insbesondere hinsichtlich seiner Form bzw. seines Querschnitts. Das Luftführungselement kann im Querschnitt insbesondere kreisförmig oder ellipsenförmig ausgebildet sein. Das Modulgehäuse kann hiervon unabhängig eine andere äußere Gestaltung aufweisen, insbesondere kann das Modulgehäuse im Wesentlichen ebene Außenflächen aufweisen, die den Einbau entlang von in der Regel ebenen Fahrzeugstrukturen, wie Wänden, Verkleidungen, Boden und dergleichen vereinfacht.

Das Luftführungselement weist folgende Teile bzw. Führungsabschnitte auf:
- einen ersten Führungsabschnitt, der mit der Lufteintrittsöffnung verbunden ist,
- einen zweiten Führungsabschnitt, der mit der Luftaustrittsöffnung verbunden ist, und
- einen dritten Führungsabschnitt, der zwischen dem ersten und dem zweiten Führungsabschnitt aufgenommen und mit diesen verbunden ist.

Die Führungsabschnitte können als rohrartige Bauteile ausgebildet sein. Dabei kann jeder Führungsabschnitt ein in sich stabiles Bauteil sein. Die Führungsabschnitte können an ihren betreffenden Enden miteinander verbunden werden, wobei die Führungsabschnitte insbesondere so ausgebildet werden können, dass der erste Führungsabschnitt und der zweite Führungsabschnitt mittels einer Formschlussverbindung, wie etwa Steckverbindung oder Rastverbindung, mit dem dritten Führungsabschnitt gekoppelt sind. Denkbar sind aber auch andere Verbindungsarten wie etwa eine Gewindeverbindung, bei der an einem Führungsabschnitt ein kurzes Außengewinde vorgesehen ist und an dem anderen Führungsabschnitt ein korrespondierendes Innengewinde. Ferner können die Führungsabschnitte bei Bedarf auch materialschlüssig miteinander verbunden sein, etwa durch eine Verklebung.

Das erste Heizmodul kann als Heizung mit einem Heizelement ausgebildet sein, die zur Erwärmung von Luft ausgestaltet ist, die die Gebläsevorrichtung fördert. Bei der Heizanlage kann das erste Heizmodul eine elektrische Heizung mit einer Heizwendel - als Beispiel für das Heizelement - sein, die zur Erwärmung von Luft ausgestaltet ist, die die Gebläsevorrichtung fördert. Dabei kann die Heizwendel in dem dritten Führungsabschnitt angeordnet sein. Ein elektrisches Heizmodul kann in der Regel sehr einfach und platzsparend eingebaut werden, da lediglich ein Stromanschluss vorgesehen werden muss. Ferner kann eine elektrische Heizung als Heizmodul auch einfach in eine bestehende Heizanlage integriert werden. Dabei ist es besonders vorteilhaft, dass das Heizmodul passiv von Luft durchströmt wird, d.h. das Heizmodul selbst verfügt nicht über ein eingebautes Gebläse.

Der erste Führungsabschnitt des Luftführungselements kann mehrere Umlenkelemente aufweisen, sodass von der Gebläsevorrichtung geförderte Luft beim Eintritt in das erste Heizmodul und/oder beim Austritt aus dem ersten Heizmodul an den Umlenkelementen in bestimmte Richtungen umgelenkt wird. Die Umlenkelemente dienen insbesondere dazu, die geförderte Luft im Heizmodul so zu verteilen bzw. strömen zu lassen, dass eine optimale Wärmeübertragung im Bereich der Heizwendel erfolgen kann. Ferner führen die Umlenkelemente zu einer verbesserten Durchmischung der beim Heizmodul ankommenden Luft und zu einer anschließend gleichmäßigeren Erwärmung.

Die Heizanlage kann ein zweites Heizmodul aufweisen, das von dem ersten Heizmodul gesondert ist und das dem ersten Heizmodul vorgelagert ist. Dies ermöglicht es, das erste Heizmodul als Zusatzheizung oder als Alternativheizung zu dem zweiten Heizmodul einzusetzen.

Das zweite Heizmodul und die Gebläsevorrichtung können gemeinsam in dem zweiten Modulgehäuse untergebracht sein. Dabei bilden das zweite Heizmodul und die Gebläsevorrichtung eine Heizeinheit. Das zweite Heizmodul und die Gebläsevorrichtung können in der Heizanlage des bewohnbaren Fahrzeug auch eine Art Hauptheizung bilden, wobei die Heizanlage durch das erste Heizmodul als Zusatz- oder Alternativheizung ergänzt werden kann.

Die Steuervorrichtung kann mit dem zweiten Heizmodul drahtlos oder drahtgebunden verbunden sein und dazu eingerichtet ist, mit dem zweiten Heizmodul zu kommunizieren. Dies ermöglicht es, dass das erste Heizmodul in Abstimmung mit dem zweiten Heizmodul betrieben werden kann. Der Begriff Steuervorrichtung ist in diesem Zusammenhang auch so zu verstehen, dass sie mehrere beispielsweise den Heizmodulen zugeordnete Steuereinheiten, wie etwa Steuerplatinen umfasst, wobei diese Steuereinheiten miteinander in Kommunikationsverbindung stehen. Ferner kann zu einer Steuervorrichtung auch ein externes Gerät gehören, wie etwa ein mobiles Telefon, ein Tablet-Computer oder dergleichen, auf dem ein entsprechende Applikation zur Steuerung der Heizanlage gespeichert ist und ausgeführt werden kann. Das externe Gerät kann beispielsweise über eine drahtlose Funkverbindung mit der Steuervorrichtung bzw. einer Steuereinheit stehen.

Bei der Heizanlage kann die Steuereinrichtung dazu eingerichtet sein, die Heizanlage
- mit dem ersten Heizmodul alleine und der Gebläsevorrichtung oder
- mit dem zweiten Heizmodul alleine und der Gebläsevorrichtung oder
- mit dem ersten Heizmodul und dem zweiten Heizmodul gemeinsam und der Gebläsevorrichtung
in einem Heizbetrieb zu betreiben. Dies ermöglicht eine flexible Nutzung der Heizanlage. Dabei kann der Betrieb von einem oder beiden Heizmodulen insbesondere davon abhängen, welche Wärmemenge benötigt wird oder ob ein Aufheizen des bewohnten Raumes innerhalb einer kurzen Zeit erfolgen soll. Ferner können die Heizmodule bei einem größeren bewohnten Raum auch in Abhängigkeit ihrer Lage im bewohnten Raum angesteuert werden, sodass beispielsweise ein Wohnbereich stärker beheizt wird als ein Schlafbereich.

Das zweite Heizmodul kann eine Elektroheizung oder eine Gasheizung oder eine Dieselheizung (oder allgemein eine mit Brennstoff betriebene Heizung) sein. Insbesondere die Kombination aus einem ersten Heizmodul, das als elektrische Heizung ausgeführt ist, und einem zweiten Heizmodul, das als Gasheizung oder Dieselheizung ausgeführt ist, führen zu einer hohen Flexibilisierung im Betrieb. Dabei kann die Heizanlage je nach verfügbarer Energiequelle mit Gas alleine oder mit Strom allein oder kombiniert betrieben werden. Die Verwendung der elektrischen Heizung ist insbesondere dann von Vorteil, wenn das bewohnbare Fahrzeug länger an dem gleichen Ort steht und ein externer Stromanschluss vorhanden ist. Die Verwendung der Gasheizung kann bei kurzen Standzeiten vorteilhaft sein, wenn kein externer Stromanschluss vorhanden ist oder es vom Benutzer nicht gewünscht ist, dass ein externer Stromanschluss eingesetzt wird.

Bei der Heizanlage kann das erste Modulgehäuse mittels einer Adaptervorrichtung am zweiten Modulgehäuse befestigbar oder befestigt sein. Dies ermöglicht einen Zusammenbau des ersten Heizmoduls und des zweiten Heizmoduls in einer kompakten Art und Weise. Ferner wird durch die Adaptervorrichtung auch ein Nachrüsten einer Heizanlage ermöglicht, etwa wenn die Heizanlage anfänglich nur ein zweites Heizmodul (mit integriertem Gebläse) aufweist und um ein erstes Heizmodul ergänzt werden soll.

Bei der Heizanlage können das erste Heizmodul und die Gebläsevorrichtung räumlich getrennt voneinander angeordnet sein und luftströmungstechnisch mittels eines Rohres oder eines Schlauches miteinander verbunden sein. Denkbar ist in diesem Zusammenhang auch, dass das erste Heizmodul und das zweite Heizmodul (mit integriertem Gebläse) über eine Rohr- oder Schlauchverbindung luftströmungstechnisch miteinander verbunden sind. Hierdurch kann die Ausgestaltung der Heizanlage mit ihren modularen Komponenten weiter flexibilisiert werden.

Die Heizanlage kann wenigstens ein stromabwärts des ersten Heizmoduls angeordnetes Anlagenmodul aufweisen, das luftströmungstechnisch mit dem ersten Heizmodul verbunden ist, wobei das Anlagenmodul ein weiteres Rohr oder ein Schlauch oder ein Luftströmungsteiler oder eine weitere Gebläsevorrichtung ist. Dies ermöglicht eine bessere Verteilung der im ersten Heizmodul aufgewärmten Luft zu gewünschten Bereichen im bewohnten Raum.

Nachfolgend wird die Erfindung unter Bezugnahme auf die anliegenden Figuren anhand einer Ausführungsform beschrieben, dabei zeigt:
- Fig. 1: eine schematische Prinzipdarstellung einer Heizanlage;
- Fig. 2: ein Ausführungsform einer Heizanlage mit einem erstem Heizmodul und einemzweitem Heizmodul;
- Fig. 3: in Teilfigur A) eine Verbindung von erstem Heizmodul und zweitem Heizmodul mittels einer Adaptervorrichtung und in Teilfigur B) mittels eines Luft führenden Rohres bzw. Schlauches;
- Fig. 4: das erste Heizmodul mit einem weiteren Rohr bzw. Schlauch zur Verteilung von erwärmter Luft;
- Fig. 5: eine perspektivische Explosionsdarstellung eines (ersten) Heizmoduls;
- Fig. 6: eine perspektivische Explosionsdarstellung eines Luftführungselements des (ersten) Heizmoduls der Fig. 5;
- Fig. 7: eine Längsschnittdarstellung des (ersten) Heizmoduls der Fig. 5 etwa entsprechend einer Schnittlinie VII-VII der Fig.5;
- Fig. 8: eine perspektivische Explosionsdarstellung eines dritten Führungsabschnitts und von Heizwendeln des (ersten) Heizmoduls der Fig. 5;
- Fig. 9: eine teilgeschnittene Perspektivdarstellung einer alternativen Ausführungsform des (ersten) Heizmoduls;
- Fig. 10: eine perspektivische Darstellung eines zweiten Führungsabschnitts, wobei die strömungszugewandte (Innen-)Seite sichtbar ist.
- Fig. 11: in den Teilfiguren A) und B) perspektivische Darstellungen eines Führungsabschnitts mit mehreren Umlenkelementen in einem Umlenkkranz;
- Fig. 12: in den Teilfiguren A) und B) perspektivische Darstellungen eines Führungsabschnitts mit mehreren Umlenkelementen in zwei Umlenkkränzen;
- Fig. 13: in den Teilfiguren A) und B) perspektivische Darstellungen eines Führungsabschnitts mit einem ringförmigen Umlenkelement;
- Fig. 14: in den Teilfiguren A) und B) perspektivische Darstellungen eines Führungsabschnitts mit Verdrängerelement;
- Fig. 15: in den Teilfiguren A) und B) eine Längsschnittdarstellung und eine teilgeschnittene Perspektivdarstellung des Luftführungselements mit Verdrängerelement;
- Fig. 16: in den Teilfiguren A) bis C) eine Verbindung zwischen Heizmodul und Rohrstück mittels eines Rohradapters.

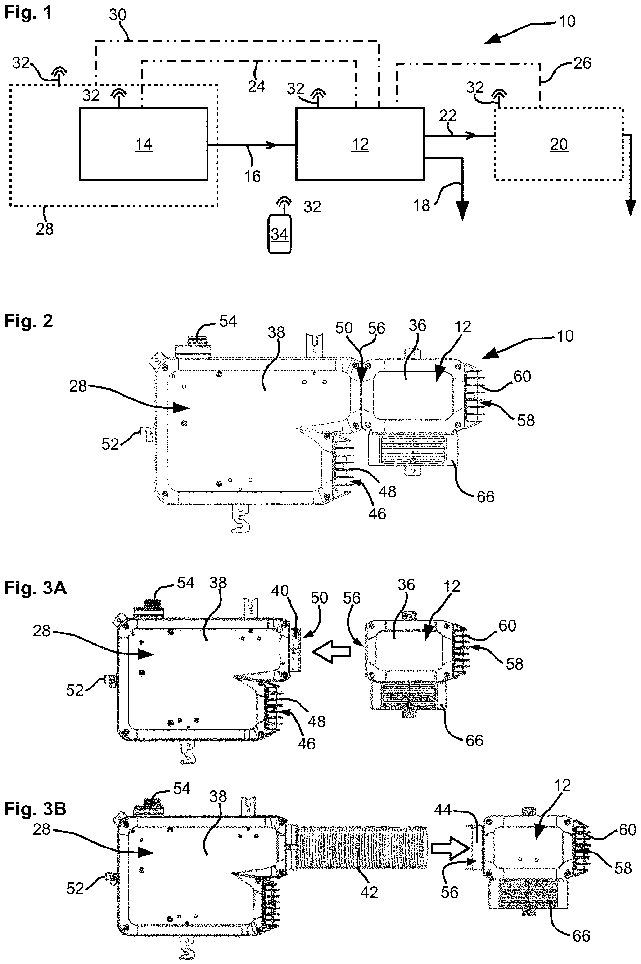

In Figur 1 ist vereinfacht und schematisch ein Prinzipdiagramm einer Heizanlage 10 dargestellt. Die Heizanlage weist ein erstes Heizmodul 12 auf, das mit einer gesonderten Gebläsevorrichtung 14 verbunden ist. Die luftströmungstechnische Verbindung 16 zwischen dem ersten Heizmodul 12 und der Gebläsevorrichtung 14 ist hier nur durch eine Linie illustriert. Zu erwärmende Luft wird von der Gebläsevorrichtung 14 mittels der Leitung 16 zum ersten Heizmodul 12 gefördert. Die Luft wird im ersten Heizmodul 12 erwärmt und tritt dann wieder aus dem ersten Heizmodul 12 aus. Die erwärmte Luft kann dabei direkt aus dem ersten Heizmodul 12 in einem bewohnbaren Raum austreten, wie dies durch den Pfeil 18 symbolisiert ist. Alternativ kann das erste Heizmodul 12 stromabwärts mit einer weiteren Komponente 20 der Heizanlage 10 verbunden sein, wobei die Verbindung hier durch einen weiteren Pfeil 22 symbolisiert ist.

Die weitere Komponente 20 kann beispielsweise ein Verteiler, eine weitere Gebläsevorrichtung oder ein Rohr bzw. Schlauch sein. Denkbar ist auch, dass sich nicht nur eine weitere Komponente 20 anschließt, sondern mehrere Komponenten. Es kann insbesondere daran gedacht werden, als weitere Komponenten noch eine Gebäsevorrichtung 14 und ein weiteres (erstes) Heizmodul 12 vorzusehen, sodass auf die hier dargestellte Gebläsevorrichtung 14 und das erste Heizmodul 12 nochmals eine Gebläsevorrichtung 14 und ein erstes Heizmodul 12 folgen, die hier vereinfacht als weitere Komponente 20 dargestellt sind.

Das erste Heizmodul 12 und die Gebläsevorrichtung 14 weisen eine Kommunikationsverbindung 24 auf, die als strichpunktierte Linie dargestellt ist. Eine Kommunikationsverbindung 26 kann auch zwischen dem ersten Heizmodul 12 und der weiteren Komponente 20 vorhanden sein.

Die Gebläsevorrichtung 14 kann Teil eines zweiten Heizmoduls 28 sein. Es wird insbesondere daran gedacht, dass das zweite Heizmodul 28 und die Gebläsevorrichtung 14 eine integrierte Heizung bilden. Auch zwischen dem ersten Heizmodul 12 und dem zweiten Heizmodul 28 kann bei dieser Ausgestaltung eine Kommunikationsverbindung 30 vorgesehen sein. Einstellungen der Heizanlage 10 können beispielsweise am ersten Heizmodul 12 oder/und am zweiten Heizmodul 28 vorgenommen werden, insbesondere an entsprechenden Steuervorrichtungen (nicht dargestellt).

Denkbar ist auch, dass das erste Heizmodul 12 und/oder die Gebläsevorrichtung 14 oder/und das zweite Heizmodul 28 oder/und die weitere(n) Komponente(n) 20 über eine drahtlose Kommunikationsschnittstelle 32 verfügen. Mittels drahtloser Kommunikationsschnittstellen 32 können die verschiedenen Module bzw. Komponenten der Heizanlage 10 untereinander (Steuer-)Daten austauschen. Ferner ist es auch denkbar, die Module bzw. Komponenten mittels einer drahtlosen Fernbedienung 34 der Heizanlage 10 zu anzusteuern. Die Fernbedienung 34 kann beispielsweise in Form einer Applikation auf einem mobilen Telefon oder einem Tabletcomputer realisiert sein. Es versteht sich von selbst, dass auch die Fernbedienung 34 über einem Kommunikationsschnittstelle 32 verfügt. Als drahtlose Kommunikationsverbindung kann beispielsweise ein WLAN oder eine Bluetooth-Verbindung dienen. Hinsichtlich der Kommunikationsverbindung ist es auch denkbar, dass beispielsweise das erste Heizmodul 12 oder das zweite Heizmodul 28 mittels der drahtlosen Kommunikationsverbindung angesteuert werden können, und andere Module bzw. Komponenten der Heizanlage 10 mittels kabelgebundener Verbindungen, wie etwa die Leitungen 24, 26, 30, angesteuert werden.

Figur 2 zeigt in einer schematischen Draufsicht eine Ausführungsform einer Heizanlage 10 mit dem ersten Heizmodul 12 und dem zweiten Heizmodul 28. Das erste Heizmodul 12 weist ein erstes Modulgehäuse 36 auf. Das zweite Heizmodul 28 weist ein zweites Modulgehäuse 38 auf. Im dargestellten Beispiel sind das erste Heizmodul 12 und das zweite Heizmodul 28 direkt miteinander verbunden.

Wie aus der Figur 3A ersichtlich, können das erste Heizmodul 12 und das zweite Heizmodul 28 mittels einer Adaptervorrichtung 40 miteinander verbunden sein. Figur 3A zeigt hierbei den nicht verbundenen Zustand der beiden Heizmodule 12, 28. Fig. 2 zeigt den verbundenen Zustand, wenn das erste Heizmodul 12 entsprechend der Pfeilrichtung in Figur 3A auf die Adaptervorrichtung 40 gesteckt worden ist. In einer alternativen Ausgestaltung verfügen das erste Heizmodul 12 und das zweite Heizmodul 28 über passende mechanische Schnittstellen (oder allgemein Kontaktbereiche) für das Abführen bzw. Zuführen von Luft, sodass sie direkt miteinander verbunden werden können.

Figur 3B zeigt die Möglichkeit, dass zwischen dem ersten Heizmodul 12 und dem zweiten Heizmodul 28 ein luftströmungstechnische Verbindung in Form eines Rohres oder eines Schlauches 42 möglich ist. Hierzu weist das erste Heizmodul 12 einen Rohradapter 44 auf, in den das Rohr bzw. der Schlauch 42 eingeführt und befestigt werden kann.

Es wird darauf hingewiesen, dass das in den Figuren 2 und 3 dargestellte zweite Heizmodul 28 eine in diesen Figuren nicht sichtbare Gebläsevorrichtung aufweist. Mittels der Gebläsevorrichtung wird Luft vom zweiten Heizmodul 28 zum ersten Heizmodul 12 gefördert. Ferner wird darauf hingewiesen, dass anstelle des zweiten Heizmoduls 28 auch nur eine Gebläsevorrichtung (ohne Heizfunktion) mit dem ersten Heizmodul verbunden sein könnte, so wie dies in Fig. 1 schematisch dargestellt und oben erläutert worden ist.

Das zweite Heizmodul 28 kann beispielsweise eine Heizung sein, die mit Gas oder mit Diesel oder elektrisch betrieben wird. Das erste Heizmodul 12 ist vorzugsweise eine elektrisch betriebene Heizung. Das hier dargestellte zweite Heizmodul 28 weist in seinem zweiten Modulgehäuse 38 eine Lufteintrittsöffnung 46 auf. Die Lufteintrittsöffnung 46 ist durch ein Schutzgitter 48 abgedeckt. In das zweite Heizmodul 28 angesaugte Luft wird innerhalb des zweiten Heizmoduls 28 umgewälzt (mittels der nicht sichtbaren Gebläsevorrichtung) und erwärmt (mittels eines nicht sichtbaren Gasbrenners), und tritt dann an einer Luftaustrittsöffnung 50 wieder aus. Das zweite Heizmodul 28 kann auch nur zum Umwälzen von Luft betrieben werden, ohne dass die Luft darin erwärmt wird. Der Vollständigkeit halber wird noch darauf hingewiesen, dass am zweiten Heizmodul 28 ein Gasanschluss 52 vorgesehen ist. Ferner weist das zweite Heizmodul 28 einen Abgasauslass 54 auf, an dem Abgase nach der Verbrennung von Gas austreten können bzw. über eine hier nicht weiter dargestellte Abgasleitung abgeführt werden können.

Das erste Heizmodul 12 weist an seinem ersten Modulgehäuse 36 eine Lufteintrittsöffnung 56 und eine Luftaustrittsöffnung 58 auf. Die Lufteintrittsöffnung 56 ist im Falle der Fig. 2 bzw. 3B mittels der Adaptervorrichtung 40 unmittelbar gegenüber der Luftaustrittsöffnung 50 des zweiten Heizmoduls angeordnet, wenn die beiden Heizmodule miteinander verbunden sind. Im Beispiel der Fig. 3B erstreckt sich zwischen der Luftaustrittsöffnung 50 des zweiten Heizmoduls 28 und der Lufteintrittsöffnung 56 des ersten Heizmoduls 12 der Schlauch bzw. das Rohr 42. An der Lufteintrittsöffnung 56 ist der Rohradapter 44 angeordnet. Das erste Heizmodul 12 weist im Bereich seiner Luftaustrittsöffnung 58 ein Schutzgitter 60 auf.

Die Heizanlage 10 kann so betrieben werden, dass durch die Gebläsevorrichtung 14 (Fig. 1) geförderte Luft nur durch das erste Heizmodul 12 erwärmt wird. Alternativ kann die Heizanlage 10 so betrieben werden, dass durch die Gebläsevorrichtung 14 geförderte Luft nur durch das zweite Heizmodul 28 erwärmt wird. Schließlich ist es auch möglich, die Heizanlage 10 so zu betreiben, dass durch die Gebläsevorrichtung 14 geförderte Luft sowohl im zweiten Heizmodul 28, als auch im ersten Heizmodul 12 aufgewärmt wird.

Wie insbesondere aus den Figuren 2 und 3 ersichtlich, kann das erste Heizmodul 12 als Zusatz- bzw. Ergänzungsheizung zum zweiten Heizmodul 28 eingesetzt werden. Unter der Berücksichtigung, dass das zweite Heizmodul 28 im dargestellten Beispiel eine Gasheizung ist und das erste Heizmodul 12 eine Elektroheizung, kann ein Heizbetrieb der Heizanlage 10 wahlweise mit Gas oder mit Strom oder kombiniert erfolgen. Der Betrieb des ersten Heizmoduls 12 bietet sich insbesondere dann an, wenn das bewohnbare Fahrzeug mit einem externen Stromanschluss verbunden ist. In einem kombinierten Heizbetrieb von ersten Heizmodul 12 und zweitem Heizmodul 28 kann die Steuerung bzw. Regelung der beiden Heizmodule auch so eingerichtet sein, dass der jeweilige Verbrauch von Gas bzw. Strom optimiert wird. Dies kann insbesondere unter Berücksichtigung von Parametern erfolgen, wie etwa der Außentemperatur, der aktuellen Innentemperatur, der zu erreichende Innentemperatur oder dergleichen. Denkbar ist beispielsweise auch eine Art Schnellaufheizungsbetrieb, bei dem beide Heizmodule so aufeinander abgestimmt betrieben werden, dass eine Heizleistung der Heizanlage 10 erreicht wird, die den bewohnbaren Raum innerhalb einer minimalen Zeitdauer auf eine gewünschte Innentemperatur aufwärmt.

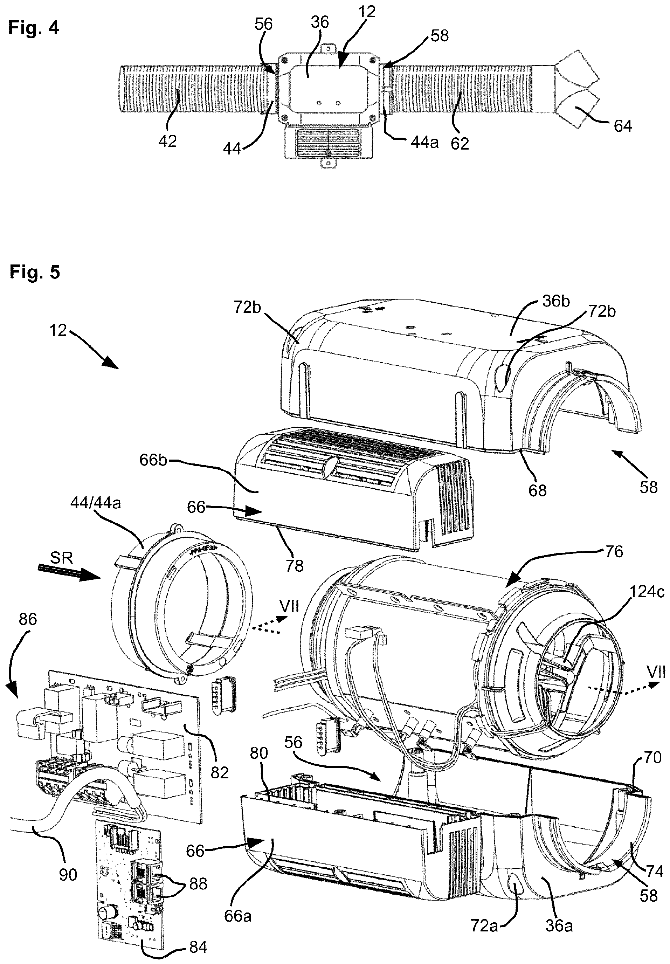

In Figur 4 ist das erste Heizmodul 12 mit der aus Fig. 3B bekannten Rohr- bzw. Schlauchverbindung 42 dargestellt als Teil einer Heizanlage 10. Die Schlauchverbindung 42 ist dabei über den Rohradapter 44 mit der Lufteintrittsöffnung 56 des ersten Heizmoduls 12 kontaktiert. Im Bereich der Luftaustrittsöffnung 58 ist anstatt des Schutzgitters 60 ein weiterer Rohradapter 44a angeordnet. An diesem Rohradapter 44a ist eine weitere rohr- bzw. schlauchförmige Verbindungsleitung 62 angeschlossen. Stromabwärts weist das Rohr bzw. der Schlauch 62 ein Verteilerelement 64 auf, an dem der Luftstrom in unterschiedliche Richtungen austreten kann oder weitergeleitet werden kann, wenn sich an das Verteilerelement 64 noch ein weiteres rohr- bzw. schlauchartiges Verbindungselement anschließen sollte. Die Verbindungsleitung 62 oder/und das Verteilerelement 64 können auch als weitere Komponenten der Heizanlage bezeichnet werden, die in der schematischen Figur 1 als weitere Komponente 20 subsumiert sind.

In den Figuren 2 bis 4 ist ferner ersichtlich, dass an dem Modulgehäuse 36 des ersten Heizmoduls 12 ein Zusatzgehäuse 66 vorgesehen ist. Das Zusatzgehäuse 66 dient der Aufnahme von in diesen Figuren nicht sichtbaren elektronischen Bauteilen, die vornehmlich zur Steuerung des ersten Heizmoduls 12 eingerichtet sind.

Nachfolgend wird unter Bezugnahme auf die Figuren 5 bis 10 das in der Heizanlage 10 einsetzbare erste Heizmodul 12 genauer beschrieben. Sofern nachfolgend der Begriff "Heizmodul" alleine verwendet wird, ist damit im Kontext dieser Anmeldung immer das "erste Heizmodul" der Heizanlage gemeint. Insoweit können nachfolgend beschriebene Eigenschaften und Merkmale des Heizmoduls 12 auch als Weiterbildungen für das oben beschriebene erste Heizmodul 12 der Heizanlage 10 verstanden werden.

Figur 5 zeigt das Heizmodul 12 in einer perspektivischen Explosionsdarstellung. Das (erste) Modulgehäuse 36 weist eine untere Halbschale 36a und eine obere Halbschale 36b auf. Die beiden Halbschalen 36a, 36b sind insbesondere formschlüssig miteinander verbindbar. Hierzu weist die obere Halbschale 36b eine umlaufende Feder 68 auf und die untere Halbschale 36a weist eine Nut 70 auf. Die beiden Halbschalen 36a, 36b sind mittels nicht dargestellter Schrauben im verbundenen Zustand gesichert. Diesbezüglich wird auch entsprechende Schrauböffnungen 72a und 72b hingewiesen, die in den jeweiligen Halbschalen 36a, 36b vorgesehen sind.

In Figur 5 ist der Blick freigegeben auf die Luftaustrittsöffnung 58 des ersten Modulgehäuses 36. Das Modulgehäuse 36 weist im Bereich der Luftaustrittsöffnung 58 einen im Wesentlichen kreisförmigen Flansch 74 auf. An diesem Flansch 74 kann das in den Figuren 2 und 3 dargestellte Schutzgitter 60 angebracht werden. Ferner kann mit dem Flansch 74 ein in der Figur 4 dargestellter Rohradapter 44a verbunden werden. Die Lufteintrittsöffnung 56 des Modulgehäuses 36 ist teilweise im Bereich der unteren Halbschale 36a ersichtlich. Zu erkennen ist auch an der Luftaustrittsöffnung 58 eine Stirnseite 124c eines später noch genauer beschriebenen Verdrängerelements, das Luft zu einer Sensorvorrichtung umlenkt.

In dem (ersten) Modulgehäuse 36 ist eine Luftführungselement 76 aufgenommen. Das Luftführungselement 76 bildet eine Art Innengehäuse, durch das die zu erwärmende Luft entlang einer Hauptströmungsrichtung SR hindurchströmt. Stromaufwärts des Luftströmungselements 76 ist beispielhaft ein Rohradapter 44 bzw. 44a dargestellt, der insbesondere dazu eingerichtet ist, ein Rohr bzw. einen Schlauch 42 bzw. 62 (Fig. 4) mit dem (ersten) Heizmodul 12 zu verbinden.

Wie bereits unter Bezugnahme auf die Figuren 2 bis 4 erwähnt, ist am (ersten) Modulgehäuse 36 ein Zusatzgehäuse 66 angeordnet. Das Zusatzgehäuse kann ebenfalls durch eine untere Halbschale 66a und eine obere Halbschale 66b gebildet werden. Die beiden Halbschalen 66a, 66b des Zusatzgehäuses 66 sind ebenfalls formschlüssig miteinander verbindbar. Hierzu weist die obere Halbschale 66b eine Feder 78 auf und an der unteren Halbschale ist eine Nut 80 bereitgestellt. Das Zusatzgehäuse 66 ist dazu eingerichtet, Platinen 82, 84 aufzunehmen. Die beiden Platinen 82, 84 bilden eine Steuervorrichtung 86 des (ersten) Heizmoduls 12. An der Platine 84 sind beispielhaft zwei Steckdosen 88 ersichtlich. An diesen Steckdosen 88 können beispielsweise Kabelverbindungen 24, 26, 30 zur Kommunikation mit anderen Komponenten der Heizanlage 10 (siehe Figur 1) angeschlossen werden. Zwischen den beiden Platinen 82, 84 ist schematisch und vereinfacht ein elektrisches Kabel 90 dargestellt. Dieses Kabel 90 dient insbesondere der Stromversorgung des (ersten) Heizmoduls 12 bzw. einer (oder mehrere) darin angeordneter Heizwendel als ein Ausführungsbeispiel für das Heizelement, die in der Figur nicht sichtbar sind, weil sie im Luftführungselement 76 untergebracht sind.

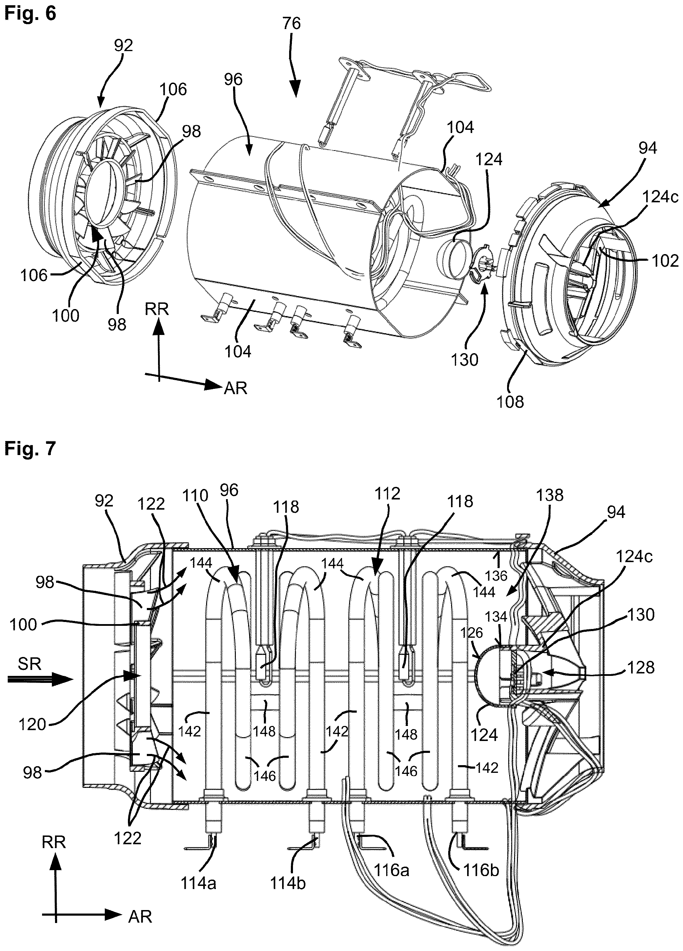

Figur 6 zeigt in einer zur Figur 5 ähnlichen perspektivischen Explosionsdarstellung das Luftführungselement 76. Das Luftführungselement 76 wird in diesem Beispiel durch einen ersten Führungsabschnitt 92, einen zweiten Führungsabschnitt 94 und einen dritten Führungsabschnitt 96 gebildet. Der erste Führungsabschnitt 92 ist im zusammengebauten Zustand des (ersten) Heizmoduls 12 im Bereich oder bezogen auf die Strömungsrichtung SR kurz hinter der Lufteintrittsöffnung 56 angeordnet. Der zweite Führungsabschnitt 94 ist im zusammengebauten Zustand des (ersten) Heizmoduls 12 im Bereich oder bezogen auf die Strömungsrichtung SR kurz vor der Luftaustrittsöffnung 58 angeordnet.

Der erste Führungsabschnitt 92 weist mehrere Umlenkelemente 98 auf. Die Umlenkelemente 98 sind hier entlang eines Kreises angeordnet und bilden gemeinsam einen Umlenkkranz 100. Die Umlenkelemente 98 weisen eine bezogen auf eine zur Strömungsrichtung SR parallele Axialrichtung des Luftführungselements 76 gebogene bzw. gekrümmte Formgebung auf. Man kann die Umlenkelemente 98 auch als eine Art Turbinenschaufeln bezeichnen. Die Umlenkelemente 98 sind mit dem ersten Führungsabschnitt 92 fest verbunden, insbesondere einstückig als integrales Bauteil ausgebildet.

Der zweite Führungsabschnitt 94 weist mehrere Stege 102 auf, die sich bezogen auf eine Radialrichtung RR von radial außen nach radial innen erstrecken. Die Stege 102 sind mit dem zweiten Führungsabschnitt 94 fest verbunden, insbesondere einstückig als integrales Bauteil ausgebildet. Zu beachten ist auch hier die Stirnseite 124c des Verdrängerelements 124 für die Sensorvorrichtung 130.

Zwischen dem ersten Führungsabschnitt 92 und dem zweiten Führungsabschnitt 94 ist der dritte Führungsabschnitt 96 aufgenommen. Der erste Führungsabschnitt 92 und der zweite Führungsabschnitt 94 sind auf den dritten Führungsabschnitt 96 aufsteckbar. Der dritte Führungsabschnitt 96 weist einen im Wesentlichen kreisförmigen Strömungsquerschnitt auf. Allerdings weist die Kreisform zwei gegenüberliegende abgeflachte Abschnitte 104 auf. Korrespondierende abgeflachte Abschnitte 106, 108 sind auch am ersten Führungsabschnitt 92 bzw. am zweiten Führungsabschnitt 94 ersichtlich. Die abgeflachten Abschnitte 104, 106, 108 dienen im zusammengebauten Zustand des Luftführungselements 76 auch als eine Art Sicherung der formschlüssigen Steckverbindung, sodass sich die Führungsabschnitte 92, 94, 96 nicht relativ zueinander verdrehen können.

Das Luftführungselement 76 ist in Figur 7 in einer Längsschnittdarstellung gezeigt, die etwa einer Schnittlinie VII-VII der Figur 5 entspricht. Ersichtlich sind der erste Führungsabschnitt 92, der zweite Führungsabschnitt 94 und der dritte Führungsabschnitt 96 im zusammengebauten Zustand. Luft tritt entsprechend der Hauptströmungsrichtung SR in der Fig. 7 von links in den ersten Führungsabschnitt 92 ein und strömt durch das Luftführungselement 76 bis sie beim zweiten Führungsabschnitt 94 wieder austritt.

In dem dritten Führungsabschnitt 96 sind zwei Heizwendeln 110, 112 angeordnet. Im vorliegenden Beispiel sind die beiden Heizwendeln 110, 112 in Strömungsrichtung SR bzw. in Axialrichtung AR nacheinander angeordnet. Die Heizwendeln sind an einem unteren abgeflachten Abschnitt 104 des dritten Führungsabschnitts 96 befestigt. Jede Heizwendel 110, 112 weist zwei außerhalb des dritten Führungsabschnitts 96 angeordnete elektrische Anschlüsse 114a, 114b bzw. 116a, 116b auf. Im Bereich von jeder Heizwendel 110, 112 ist eine jeweilige Schmelzsicherung 118 angeordnet. Die Schmelzsicherungen 118 dienen insbesondere dazu, ein Überhitzen der Heizwendeln 110, 112 zu verhindern.

Aus der Schnittdarstellung der Figur 7 sind auch die Umlenkelemente 98 am ersten Führungsabschnitt 92 ersichtlich. Der Umlenkkranz 100 weist eine zentrale Öffnung 120 auf, durch die ebenfalls Luft hindurchströmen kann. Luft, die im Bereich der Umlenkelemente 98 einströmt, wird insbesondere nach radial außen geleitet, sodass im Wesentlichen der gesamte vom dritten Führungsabschnitt 96 gebildete Strömungsquerschnitt genutzt werden kann. Dies ist durch die kurzen Pfeile 122 illustriert.

Im Strömungsquerschnitt des Luftführungselements 76 ist ferner ein Verdrängerelement 124 mit einer Stirnseite 124c angeordnet. Das Verdrängerelement 124 ist dazu eingerichtet, die Luft nach radial außen zu verdrängen und die Stirnseite 124c ermöglicht auch die Rückführung der Luft zu der Sensorvorrichtung 130. Es weist eine der Strömungsrichtung SR zugewandte Seite bzw. Fläche 126 auf, die gebogen bzw. gekrümmt ausgebildet ist. Insbesondere ist die der Strömung SR zugewandte Seite 126 kugelförmig, insbesondere als Kugelkalotte oder Halbkugel, oder als Paraboloid ausgestaltet. Im vorliegenden Beispiel dient das Verdrängerelement 124 als Abdeckung für einen Aufnahmeraum 128 einer Sensorvorrichtung 130. Der Aufnahmeraum 128 (Sensoraufnahme) ist in einem zentralen Bereich des zweiten Führungsabschnitts 94 vorgesehen. In einer Ausgestaltung kann das Verdrängerelement 124 integraler Bestandteil des zweiten Führungsabschnitts 94 sein.

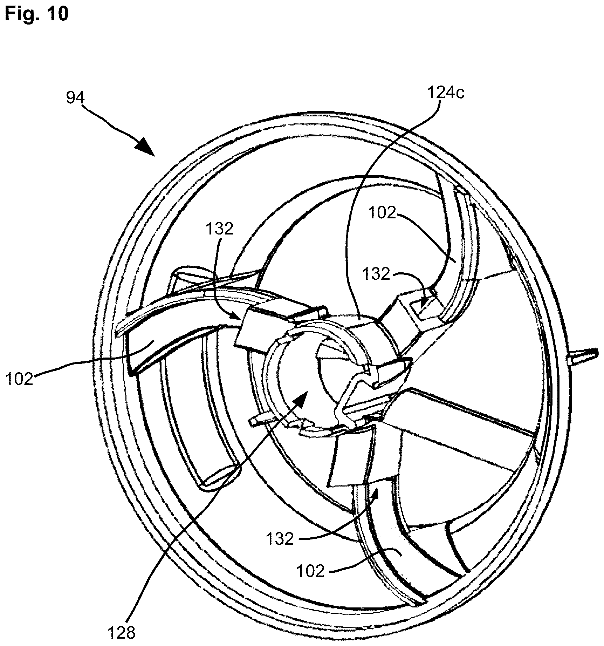

Die Sensorvorrichtung 130 ist dazu eingerichtet, die Temperatur der erwärmten Luft zu erfassen. Die Stege 102 des zweiten Führungsabschnitts 94 (vergleiche hierzu auch die nachfolgende Figur 10) weisen Luftführungskanäle 132 auf, die dazu eingerichtet sind, erwärmte Luft aus dem Hauptstrom in Richtung des Aufnahmeraums 128 und der darin angeordneten Sensorvorrichtung 130 zu leiten. Die Sensorvorrichtung 130 ist somit nicht dem Hauptstrom der erwärmten Luft ausgesetzt, sondern misst die Temperatur von einem aus dem Hauptstrom abgezweigten bzw. entnommenen Teil der Luft. Hierdurch wird insbesondere auch gewährleistet, dass eine mittlere Temperatur gemessen wird, die möglichst exakt derjenigen Temperatur entspricht, welche die Luft aufweist, wenn sie aus dem (ersten) Modulgehäuse 36 (Fig. 2 bis 5) austritt. Das Verdrängerelement 124, insbesondere dessen Außenseite 134, und die Innenseite 136 des Luftführungselements 76, insbesondere des dritten Führungsabschnitts 96, begrenzen einen ringförmigen Strömungskanalabschnitt 138.

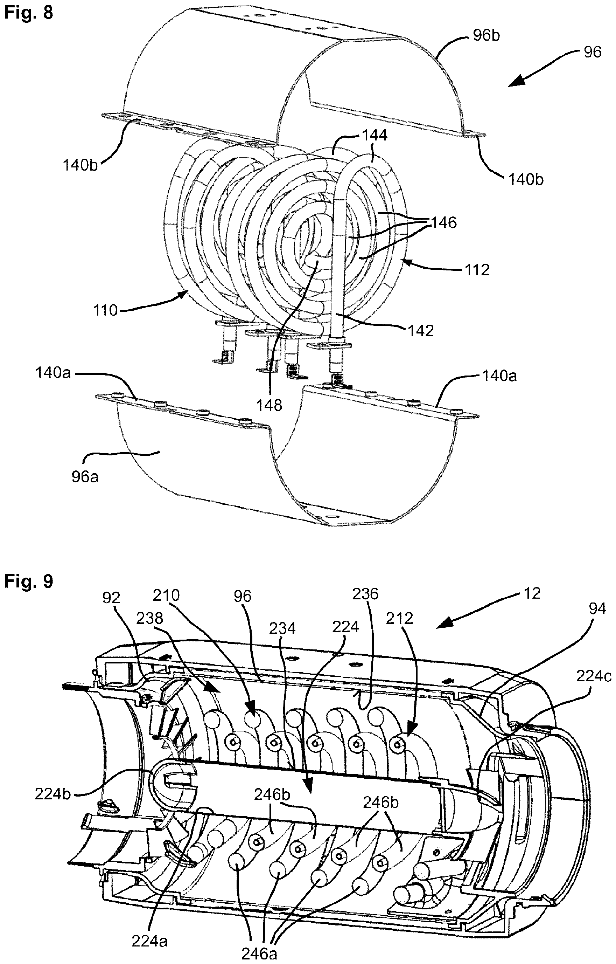

Fig. 8 zeigt ein zu den Figuren 5 und 6 ähnliche perspektivische Explosionsdarstellung des dritten Führungsabschnitts 96 und der darin angeordneten Heizwendeln 110 und 112. Aus der Darstellung ist ersichtlich, dass der dritte Führungsabschnitt 96 durch zwei im Wesentlichen halbkreisförmigen Teilprofilen 96a, 96b gebildet werden kann. Beide Teilprofile weisen jeweilige Flanschabschnitte 140a, 140b auf, an denen die beiden Teilprofile 96a, 96b miteinander verbunden werden können.

Aus der Zusammenschau der Figuren 7 und 8 ist auch die Formgebung für die beiden Heizwendeln 110, 112 ersichtlich. Jede Heizwendel 110, 112, weist zwei im Wesentlichen geradlinig verlaufende Anschlussabschnitte 142 auf. An den Anschlussabschnitt 142 schließt sich jeweils ein Übergangsabschnitt 144 an. Ausgehend vom Übergangsabschnitt 144 sind dann mehrere Windungen 146 ersichtlich, die spiralförmig ineinander übergehen. Die sprialförmigen Windungen 146, insbesondere diejenigen Windungen mit dem kleinsten Radius bzw. Durchmesser, sind radial innen, durch einen entlang der Axialrichtung AR verlaufenden Querabschnitt 148 verbunden.

Figur 9 zeigt in einer perspektivischen Teilschnittdarstellung eine alternative Ausgestaltung des (ersten) Heizmoduls 12. Dabei weist das Heizmodul 12 ein Verdrängerelement 224 auf, das sich im Wesentlichen über die gesamte Länge des Luftführungselement 76 erstreckt. Insbesondere weist das Verdrängerelement 224 einen Zentralabschnitt 224a auf, der direkt mit dem ersten Führungsabschnitt 92 und dem zweiten Führungsabschnitt 94 verbunden ist. Im Bereich des ersten Führungsabschnitts 92 ist ein halbkugelförmiges Abdeckelement 224b vorgesehen. Gegenüber dem Abdeckelement 224b befindet sich die Stirnseite 224c. Hierdurch wird anströmende Luft vor dem Eintritt in den dritten Führungsabschnitt 96 allseitig nach radial außen verdrängt und insbesondere auch Luft für die Messung der Sensorvorrichtung zugeführt. Der Strömungsquerschnitt des Luftführungselements 76 ist über im Wesentlichen die gesamte Länge ringförmig ausgestaltet. Dabei wird der ringförmige Strömungskanal 238 begrenzt durch die Außenseite 234 des Verdrängerelements 224 und die Innenseite 236 des Luftführungselement 76.

In Figur 9 ist auch eine alternative Anordnung von zwei Heizwendeln 210, 212 ersichtlich. Die erste Heizwendel 210 weist mehrere helixartig aufeinander folgende Windungen 246a auf. Die zweite Heizwendel 212 weist mehrere helixartig aufeinander folgende Windungen 246b auf. Entlang der Axialrichtung AR sind die beiden Heizwendeln 210, 212 so angeordnet, dass sich ihre Windungen 246a, 246b abwechseln. Bei jeder Heizwendel 210, 212 sind die jeweiligen Windungen 246a und 246b so ausgebildet, dass deren Durchmesser entlang der Strömungsrichtung größer wird.

Figur 10 zeigt eine perspektivische Ansicht des zweiten Führungsabschnitts 94. Es wird auf die dem dritten Führungsabschnitt 96 (Fig. 6 und 7) zugewandte Seite geblickt. Wie bereits erwähnt, sind am zweiten Führungsabschnitt 94 mehrere Stege 102 angeordnet. Im vorliegenden Beispiel sind drei Stege 102 dargestellt. Die Anzahl der Stege 102 ist aber nicht auf drei beschränkt, es können auch nur zwei Stege vorgesehen sein oder mehr als drei. Aus dieser Darstellung ist ferner der Aufnahmeraum 128 für die hier nicht dargestellte Sensorvorrichtung 130 (Fig. 6 und 7) ersichtlich. An jedem Steg 102 ist ein Luftführungskanal 132 vorgesehen, der dazu eingerichtet ist, erwärmte Luft in Richtung des Aufnahmeraums 128 umzuleiten bzw. abzuzweigen. Hierdurch wird aus unterschiedlichen Bereichen des Luftstroms ein Teil der Luft abgezweigt und zur Sensorvorrichtung 130 (Fig. 6 und 7) geleitet. Hierdurch erfolgt eine gute Durchmischung von Luft aus dem Luftstrom, sodass die Temperatur eines gemischten Luftanteils gemessen wird. Dies ermöglicht das Bestimmen bzw. Erfassen einer gemittelten Temperatur, die insbesondere möglichst exakt der Temperatur entspricht beim Austritt aus dem (ersten) Heizmodul 12. Dargestellt ist auch die Stirnseite 124c des Verdrängerelements, die der Führung von umgelenkter Luft zu der Sensorvorrichtung dient.

In den gezeigten Ausgestaltungen befinden sich jeweils das Verdrängerelement 124, 224 und die Sensorvorrichtung bzw. das Sensorelement 130 entlang der Längsachse des ersten Heizmoduls 12. Diese axiale Anordnung bezieht sich auch auf die Schmelzsicherungen 118 der Variante in den Figuren 6 und 7.

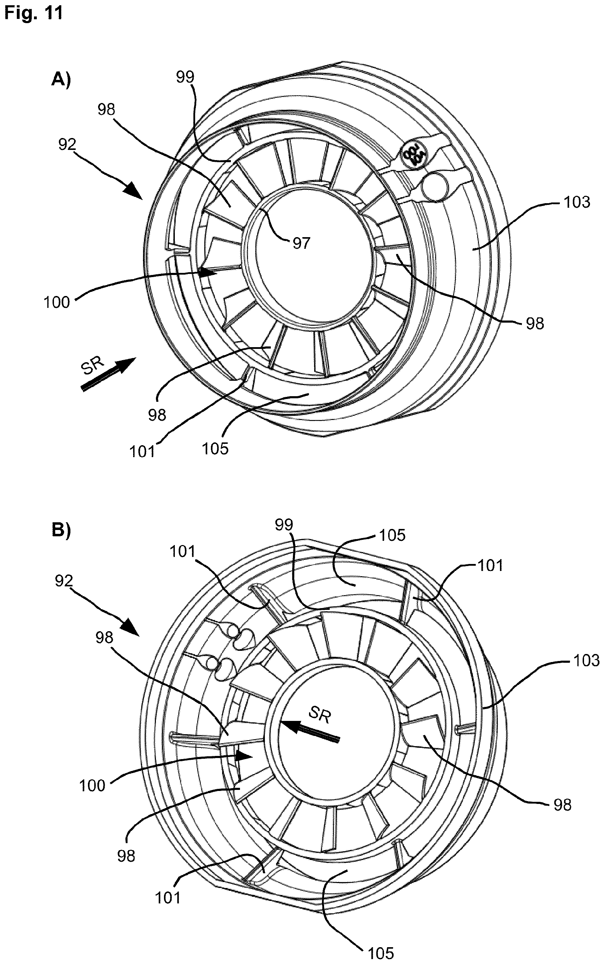

In Fig. 11 ist der erste Führungsabschnitt 92 mit den entlang eines Kreises angeordneten Umlenkelementen 98 gezeigt. Dabei zeigt die Figur 11A die der Strömung bzw. Strömungsrichtung SR zugwandte (äußere) Seite und die Fig. 11B die abgewandte (innere) Seite des ersten Führungsabschnitts 92. Die Umlenkelemente 98 sind mit einer kreis- bzw. ringförmigen Basis 97 untereinander verbunden. Die ringförmige Basis 97 ist ebenfalls Teil des Umlenkkranzes 100, der durch alle Umlenkelemente 98 gebildet ist. Radial außen sind die Umlenkelemente 98 von einem weiteren Ringelement 99 umgeben. Das radial äußere Ringelement 99 ist mittels Stegen 101 mit einer Umfangshülse 103 des erste Führungsabschnitts 92 verbunden. Wie aus den beiden Darstellungen ersichtlich, weisen die Umlenkelemente 98 ein schaufelartiges Profil auf. Radial außen sind zwischen zwei benachbarten Stegen 101 jeweils ringsektorförmige Luftdurchlässe 103 gebildet. Wie bereits oben erwähnt, ist der erste Führungsabschnitt 92 mit den Umlenkelementen vorzugsweise einstückig ausgebildet, insbesondere kann der erste Führungsabschnitt 92 als Spritzgussteil aus Kunststoff hergestellt sein. Je nach Ausgestaltung der Anlagenkomponente, mit welcher der erste Führungsabschnitt 92 in Kontakt bekommt, oder in Abhängigkeit von der Ausgestaltung der ggf. verwendeten Adaptervorrichtung usw. können die Luftdurchlässe 105 auch durch die Komponenten, die Adaptervorrichtung, den Endbereichs eines Rohrs usw. verschlossen sein.

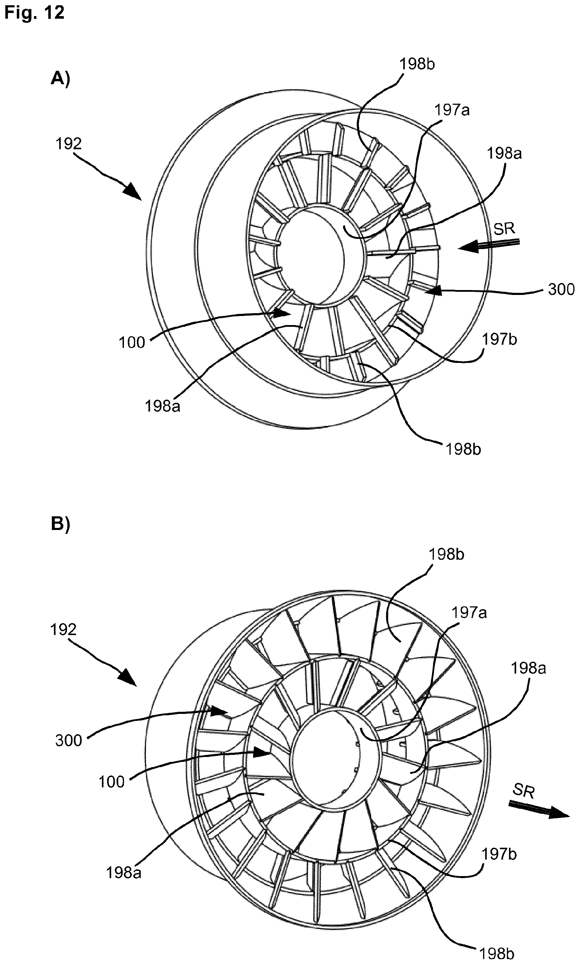

In Fig. 12 ist ein vereinfachter Führungsabschnitt 192 dargestellt mit entlang von zwei im Wesentlichen konzentrischen Kreisen angeordneten Umlenkelementen 198a und 198b. Dabei zeigt die Figur 12A die der Strömung bzw. Strömungsrichtung SR zugwandte (äußere) Seite und die Fig. 12B die abgewandte (innere) Seite des Führungsabschnitts 192. Radial innere Umlenkelemente 198a leiten dabei einströmende Luft in eine andere Richtung um als die radial äußeren Umlenkelemente 198b. Die inneren Umlenkelemente 198a sind entlang einer ringförmigen Basis 197a angeordnet. Die äußeren Umlenkelemente 198b sind entlang einer ringförmigen Basis 197b angeordnet. Die radial inneren Umlenkelemente 198a bilden in diesem Beispiel einen ersten Umlenkkranz 100. Die radial äußeren Umlenkelemente 198b bilden einen zweiten Umlenkkranz 300. Es wird darauf hingewiesen, dass der in der Fig. 12 dargestellte Führungsabschnitt 192 beispielsweise anstatt eines in den vorherigen Figuren 6 und 11 dargestellten ersten Führungsabschnitts 92 in einem Heizmodul 12 eingesetzt werden kann. Bei dem in Fig. 12 dargestellten Führungsabschnitt 192 sind insbesondere weiter radial außen liegende konstruktive Ausgestaltungen weggelassen bzw. nicht dargestellt, auch wenn für einen Einbau in einem Heizungsmodul 12 gegebenenfalls entsprechende Anpassungen bzw. konstruktive Ausgestaltungen erforderlich sind.

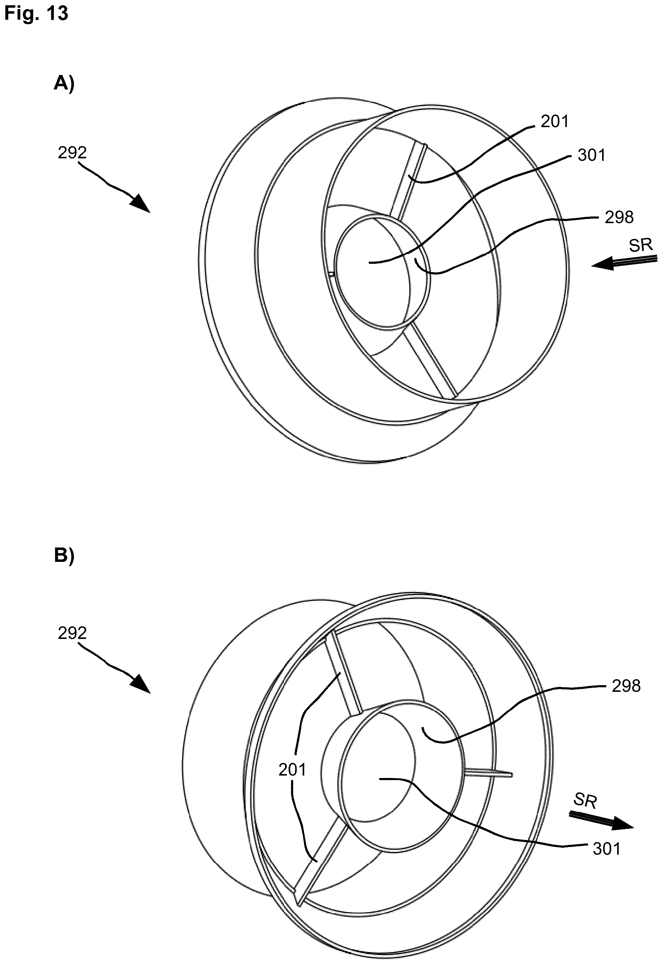

In Fig. 13 ist ein vereinfachter Führungsabschnitt 292 dargestellt mit einem als konischem Ring ausgebildeten Umlenkelement 298. Das ringförmige Umlenkelemente 298 ist durch mehrere Stege 201 in einem zentralen bzw. mittigen Bereich des Strömungsquerschnitts gehalten. Durch die konische Ausgestaltung des ringförmigen Umlenkelements 298 wird anströmende Luft nach radial außen verdrängt. Im Inneren des Umlenkelements 298 ist ein Freiraum bzw. eine Aussparung 301 vorgesehen, durch die Luft in Axialrichtung im Wesentlichen ungestört strömen kann. Es wird darauf hingewiesen, dass der in der Fig. 13 dargestellte Führungsabschnitt 292 beispielsweise anstatt eines in den vorherigen Figuren 6 und 11 dargestellten ersten Führungsabschnitts 92 oder eines in Fig. 12 dargestellten Führungsabschnitts 192 in einem Heizmodul 12 eingesetzt werden kann. Bei dem in Fig. 13 dargestellten Führungsabschnitt 292 sind insbesondere weiter radial außen liegende konstruktive Ausgestaltungen weggelassen bzw. nicht dargestellt, auch wenn für einen Einbau in einem Heizungsmodul 12 gegebenenfalls entsprechende Anpassungen bzw. konstruktive Ausgestaltungen erforderlich sind.

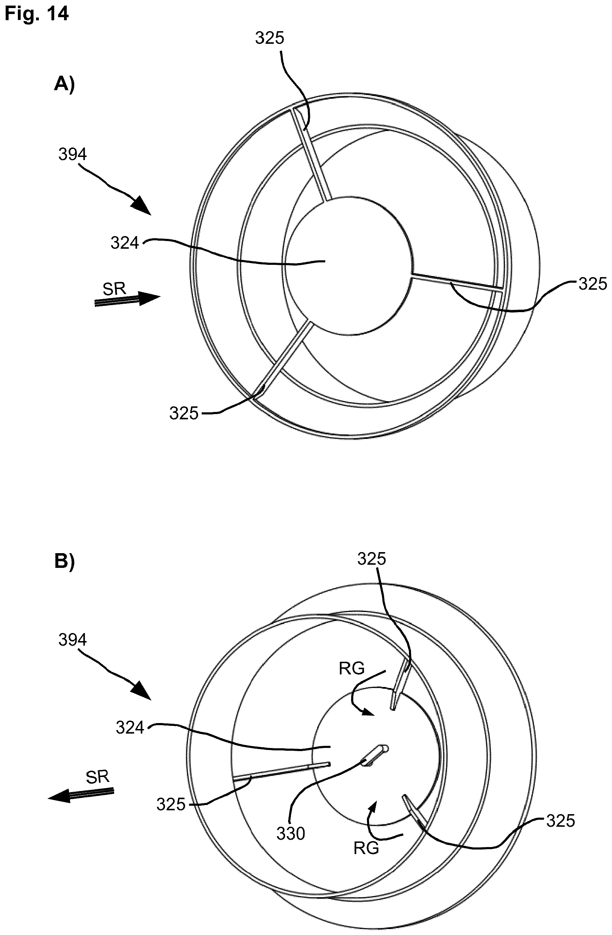

Die Figur 14 zeigt in den Teilfiguren A) und B) zwei perspektivische und vereinfachte Darstellungen eines Verdrängerelements 324, das als Platte ausgestaltet ist. Das Verdrängerelement 324 ist hier beispielhaft über radiale Streben 325 an dem zweiten Führungsabschnitt 394 befestigt. Im gezeigten Ausführungsbeispiel handelt es sich um eine plane und krümmungsfreie Platte. In alternativen Ausgestaltungen handelt es sich um konkave oder konvexe oder ggf. anderweitig gekrümmte Platten, beispielsweise in der Form ähnlich zu dem in Figur 6 oder 7 dargestellten Verdrängerelement 124. Das Verdrängerelement 324 ist hier als kreisförmige Platte ausgebildet. Es ist allerdings auch denkbar, dass das Verdrängerelement 324 eine polygonale Platte sein, beispielsweise ein Sechseck, ein Achteck oder dergleichen. In Strömungsrichtung SR hinter dem Verdrängerelement 324 ist schematisch ein Sensorelement 330 dargestellt. Die Position des Sensorelements 330 ist insbesondere derartig, dass es sich in dem Rezirkulationsgebiet (angedeutet durch gebogene Pfeile RG) des Verdrängerelements 324 befindet. Diese Ausgestaltung ist ergänzend zu den Ausgestaltungen mit den Stegen vorgesehen. Die gezeigte Ausgestaltung kann beispielsweise an der Lufteintrittsöffnung 56 (siehe Fig. 3 bis 5) oder an der Luftaustrittsöffnung 58 (siehe Fig. 3 bis 5) des Heizmoduls angeordnet werden, sodass jeweils die Temperatur der zugeführten oder abgeführten Luft gemessen werden kann.

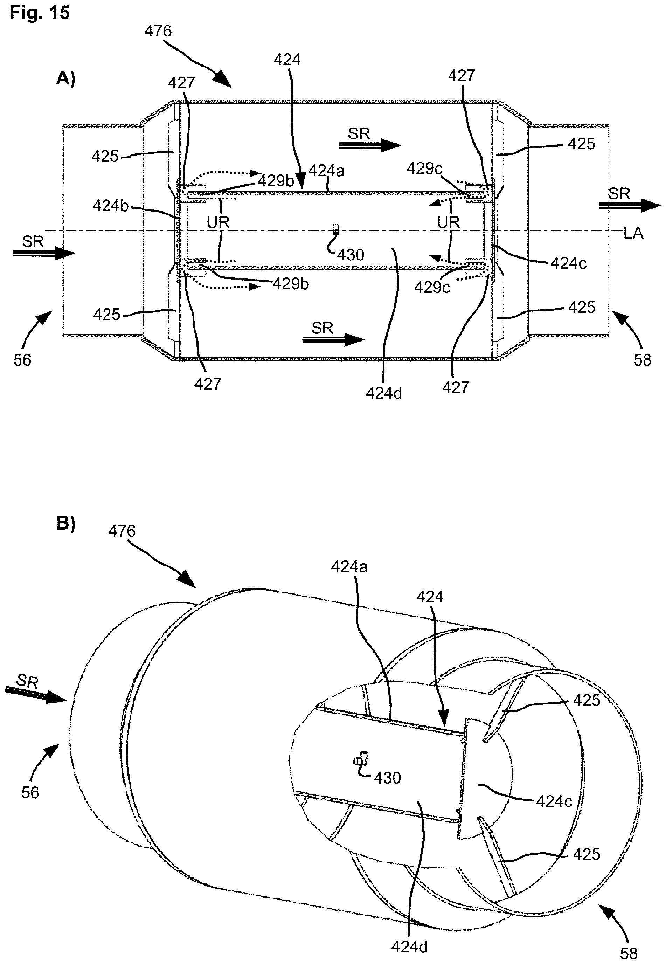

Die Figur 15 zeigt in den Teilfiguren A) und B) eine vereinfachte Längsschnittansicht und eine vereinfachte perspektivische Teilschnittansicht eines Verdrängerelements 424 im mittleren Bereich des Heizmoduls bzw. des Luftführungselements 476 und somit im Bereich, in welchem die zugeführte Luft erwärmt wird. Der mittige zylindrische - hier vor allem rohrförmige - Abschnitt 424a wird von zwei Deckeln 424b, 424c begrenzt, die hier jeweils als plane Platten ausgestaltet sind. Die Platten könnten jedoch auch gekrümmt sein. Zwischen dem zylindrischen Abschnitt 424a und den Deckeln 424b, 424c befinden sich jeweils Zwischenräume 427, die das Strömen der Luft erlauben. In dem zylindrischen Abschnitt 424a ist weiterhin ein Sensorelement 430 angeordnet, das sich hier wie bei den anderen Ausgestaltungen auch auf der Längsachse LA befindet. Der mittlere Abschnitt 424a ist an seinen axialen Enden jeweils in Ausnehmungen 429b, 429c der Deckel 424b, 424c aufgenommen. Die Ausnehmungen 429b, 429b können beispielsweise als Ringnut ausgebildet sein. Die Deckel 424b, 424c und der durch sie gehaltene mittlere Abschnitt 424a sind mittels Streben 425 im Luftführungselement 476 angeordnet.

Bei dem Verdrängerelement 424 strömt die Luft um das Verdrängerelement 424, insbesondere um den zentralen Abschnitte 424aherum von der Lufteintrittsöffnung 56 (Fig. 3 bis 5) zur Luftaustrittsöffnung 58 (Fig. 3 bis 5) des Heizmoduls. Die Luft in der Aussparung bzw. im Innenraum 424d des Verdrängerelements 424 bzw. des zentralen Abschnitts 424a strömt jedoch in umgekehrter Richtung UR, also zurück in Richtung auf die Lufteintrittsöffnung 56. Daher befinden sich an beiden Enden des zylindrischen Abschnitts 424a offene Zuführungsbereiche 427 und Abführungsbereiche 427 für die Luft. Die Luftführung entgegen der Hauptströmungsrichtung SR ist in der Figur 15A durch entsprechende Pfeile UR illustriert.

Das Luftführungselement 476 der Figur 15 weist einen bezogen auf eine Mittelebene, welche die Längsachse LA orthogonal schneidet, im Wesentlichen symmetrischen Aufbau auf. Entsprechend kann ein Heizmodul mit einer derartigen Ausgestaltung des Luftführungselements 476 in beliebiger Ausrichtung in den Strömungsweg einer Heizanlage eingebaut werden.

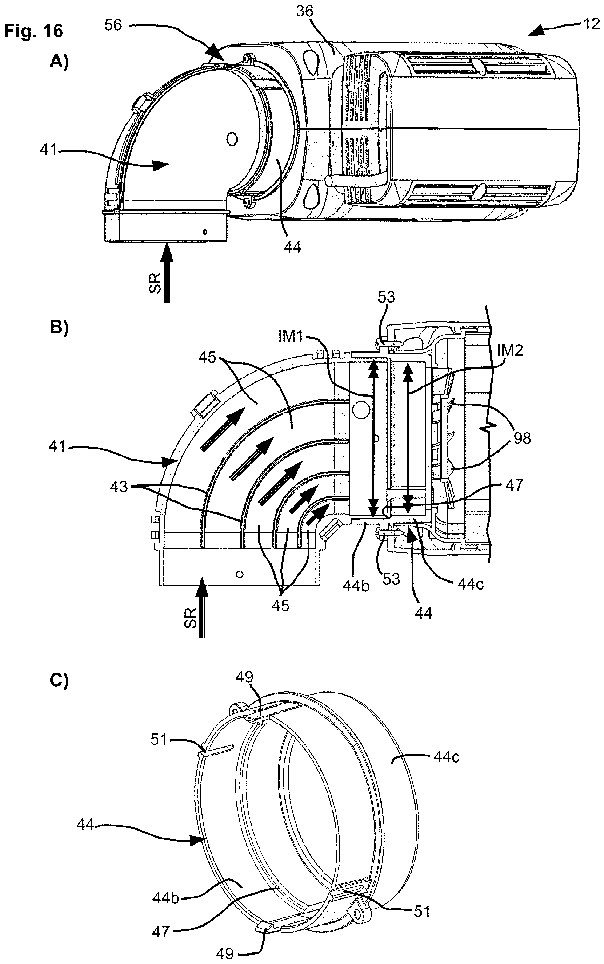

Figur 16A zeigt in einer vereinfachten perspektivischen Darstellung das Heizmodul 12, wie es bereits in den Figuren 2 bis 9 vorgestellt worden ist. Im Bereich der Lufteintrittsöffnung 56 ist ein gebogenes bzw. gekrümmtes Rohrstück 41 angebracht. Das Rohr bzw. der Rohrbogen 41 ist mittels eines bereits in der Fig. 5 dargestellten Rohradapters 44 mit dem Modulgehäuse 36 verbunden. Alternativ zu einem solchen Rohrbogen 41 ist es auch denkbar einen gekrümmten bzw. gebogenen Schlauch (nicht dargestellt) mit der Lufteintrittsöffnung 56 zu verbinden, insbesondere unter Verwendung des Rohradapters 44 bzw. eines für Schlauchverbindungen gegebenenfalls angepassten Adapters. Der Rohrbogen 41 ist dabei ein Ausführungsbeispiel für eine Luftführungskomponente, die der Homogenisierung der Strömung der Luft dient, die dem ersten Heizmodul 12 zugeführt wird.

Der gekrümmte bzw. gebogene Rohrabschnitt 41 dient insbesondere von einem nicht dargestellten Gebläse geförderte Luft in einem möglichst homogenen Strom dem Heizmodul 12 zuzuführen. Wird ein möglichst homogener Luftstrom zugeführt, wird die Effektivität des Heizmoduls 12 erhöht.

Figur 16B zeigt eine Schnittdarstellung (Längsschnitt) durch das Rohrstück 41 und den Übergang in das Modulgehäuse 36. In dem Rohrbogen 41 sind mehrere Rippen oder Bogenabschnitte 43 ausgebildet. Diese Rippen bzw. Bogenabschnitte 43 dienen der Führung von Luft und sind Beispiele für Umlenkelemente im Inneren der Luftführungskomponente. Beispielhaft sind vier Rippen bzw. Bogenabschnitte 43 dargestellt, wobei sich hieraus beispielhaft fünf Bahnen 45 ergeben, in denen Luft strömen kann. Durch die Rippen bzw. Bogenabschnitte 43 kann Luft in den Bahnen 45 gezielt in Richtung der Umlenkelemente 98 geführt werden. Anders ausgedrückt kann auch gesagt werden, dass durch die Rippen bzw. Bogenabschnitte 43 die Umlenkelemente 98 verlängert werden.

Der Rohradapter 44 weist einen stromaufwärts befindlichen ersten Abschnitt 44b mit einem ersten Innendurchmesser IM1 auf. Stromabwärts schließt sich ein zweiter Abschnitt 44c mit einem zweiten Innendurchmesser IM2 an. Der erste Innendurchmesser IM1 ist dabei größer als der zweite Innendurchmesser. Der Übergang zwischen dem ersten Abschnitt 44b und dem zweiten Abschnitt 44c wird durch eine Anschlagsfläche 47 gebildet. An dieser Anschlagsfläche 47 kann beispielsweise ein (gerades) Rohr oder ein Schlauch oder das gebogene Rohrstück 41 anliegen. Dabei ist der Außendurchmesser des Rohrstücks 41 auf den Innendurchmesser IM1 des ersten Abschnitts 44b abgestimmt.

Figur 16C zeigt den Rohradapter in einer vereinfachten perspektivischen Darstellung. Es sind insbesondere die beiden Abschnitte 44b und 44c ersichtlich. Entlang des Innenumfangs der beiden Abschnitte 44b, 44c ist die Anschlagsfläche 47 ersichtlich. An dem ersten Abschnitt 44b, in dem ein anzuschließendes Rohr bzw. ein anzuschließender Schlauch aufgenommen wird, können Rastelemente 49 vorgesehen sein. In der Darstellung sind beispielhaft zwei Rastelemente 49 dargestellt, wobei die Anzahl der Rastelemente 49 nicht auf zwei beschränkt ist, sondern auch größer sein kann. Es versteht sich von selbst, dass an dem Rohr bzw. Schlauch auch entsprechende Gegenstücke vorhanden sind, insbesondere Rastausnehmungen, in welche die Rastelemente 49 eingreifen können. Ferner können an dem ersten Abschnitt 44b auch Führungsaussparungen 51 angeordnet sein. In solche Führungsaussparungen 51 können korrespondierende Führungselemente eingeführt werden, die an dem anzuschließenden Rohr (z.B. Rohrbogen 41) oder an dem anzuschließenden Schlauch vorhanden sind.

Der Rohradapter 44 kann beispielsweise durch mehrere Schraubverbindungen 53 mit dem Modulgehäuse 12 verbunden sein. Selbstverständlich können ineinander greifende bzw. korrespondierende Verbindungsstrukturen an dem Rohradapter 44 und an dem zu verbindenden Rohr bzw. Rohrbogen 41 auch andersartig ausgeführt sein, als die hier dargestellten Rastelemente 49 und Führungsaussparungen 51. Insbesondere könnten die Rastelemente und entsprechende Raustaufnahmen vertauscht angeordnet sein, Gleiches gilt für Führungsaussparungen und entsprechende Führungselemente.

In einer alternativen - nicht dargestellten - Ausführung ist der Rohrbogen 41 frei von einer Krümmung und ist somit gleich einem geraden Rohrstück. Die Rippen bzw. Bogenabschnitte 43 dieser Ausgestaltung des Rohrbogens 41 sind bei dieser Ausgestaltung somit auch frei von einer Krümmung.

In einer ergänzenden Ausgestaltung befindet sich ein Rohrbogen 41 der mit Bezug auf Fig. 16 beschriebenen Form oder auch ohne eine Krümmung an der Luftaustrittsöffnung 56 des Heizmoduls 12. Je nach Ausgestaltung wird somit zumindest die zugeführte oder die abgeführte Luft homogenisiert.

Die hier unter Bezugnahme auf die Figuren 1 bis 4 vorgestellte Heizanlage 10 bzw. das hier unter Bezugnahme auf die Figuren 5 bis 16 vorgestellte (erste) Heizmodul 12 ermöglichen in flexibler Art und Weise einen Aufbau einer Heizanlage oder eine Erweiterung einer bestehenden Heizungsanordnung in einem bewohnbaren Fahrzeug. Insbesondere ist das (ersten) Heizmodul 12 als kompakte Elektroheizung ausgebildet, die in einfacher Weise mit luftführenden Elementen so verbunden werden kann, dass Luft mittels des (ersten) Heizmoduls 12 erwärmt werden kann. Dabei weist das (erste) Heizmodul 12 kein eigenes (integriertes) Gebläse auf, sondern wird mit einem gesonderten Gebläse verbunden, das insbesondere auch Teil einer bestehenden Heizung (zweites Heizmodul 28) sein kann.

## Patentansprüche

1. Heizmodul (12) für eine Heizanlage (10) eines bewohnbaren Fahrzeugs mit
- einem Modulgehäuse (36) mit einer Lufteintrittsöffnung (56) und einer Luftaustrittsöffnung (58),
- einem im Modulgehäuse (36) aufgenommenen Luftführungselement (76), das mehrere Führungsabschnitte (92, 94, 96) aufweist und das mit der Lufteintrittsöffnung (56) und der Luftaustrittsöffnung (58) verbunden ist, und mit
- wenigstens einem Heizelement (110, 112; 210, 212), wobei das Heizelement (110, 112; 210, 212) dazu eingerichtet ist, Luft, die von der Lufteintrittsöffnung (56) zur Luftaustrittsöffnung (58) strömt, zu erwärmen;
wobei das Luftführungselement (76) die folgenden Führungsabschnitte aufweist:
- einen ersten Führungsabschnitt (92), der mit der Lufteintrittsöffnung (56) verbunden ist,
- einen zweiten Führungsabschnitt (94), der mit der Luftaustrittsöffnung (58) verbunden ist, und
- einen dritten Führungsabschnitt (96), der zwischen dem ersten und dem zweiten Führungsabschnitt (92, 94) aufgenommen und mit diesen verbunden ist; und wobei
- das Heizelement (110, 112; 210, 212) in dem dritten Führungsabschnitt (96) aufgenommen ist;
**dadurch gekennzeichnet, dass**
- das Heizmodul (12) eine Sensorvorrichtung (130) aufweist, die dazu eingerichtet ist, die Temperatur der das Heizmodul (12) durchströmenden Luft zu erfassen;
- die Sensorvorrichtung (130) in einer Sensoraufnahme (128) angeordnet ist, die durch mehrere Stege (102) gehalten ist, und wobei die Stege (102) sich in radialer Richtung (RR) von der Sensoraufnahme (128) aus erstrecken; und dass
- einige oder alle Stege (102) einen Luftführungskanal (132) aufweisen, der so ausgebildet ist, durchströmende Luft in Richtung der Sensorvorrichtung (130) zu leiten.

2. Heizmodul nach Anspruch 1, wobei einige oder alle Stege (102) aus einem temperaturleitfähigen Material mit einer Wärmeleitfähigkeit größer oder gleich 15 W/(m * K) bestehen.

3. Heizmodul nach einem der vorstehenden Ansprüche, wobei die Sensorvorrichtung (130) als Schmelzsicherung (118) ausgebildet ist, die auf das Überschreiten einer Temperatur reagiert.

4. Heizmodul nach einem der vorstehenden Ansprüche, wobei
- mehre Temperatur-Sicherungen (118) in dem dritten Führungsabschnitt (96) angeordnet sind,
- das Heizelement (110, 112; 210, 212) mehrere Heizkomponenten (110, 112; 210, 212) aufweist, und wobei
- jeder Heizkomponente (110, 112; 210, 212) eine Temperatur-Sicherung (118) zugeordnet ist.

## Claims

1. A heating module (12) for a heating system (10) of a habitable vehicle, the heating module comprising:
- a module housing (36) with an air inlet opening (56) and an air outlet opening (58);
- an air conduction element (76) housed within the module housing (36), which has a plurality of conduction sections (92, 94, 96) and which is connected to the air inlet opening (56) and the air outlet opening (58); and
- at least one heating element (110, 112; 210, 212), wherein the heating element (110, 112; 210, 212) is adapted to heat air flowing from the air inlet opening (56) to the air outlet opening (58);
wherein the air conduction element (76) has the following conduction sections:
- a first conduction section (92) which is connected to the air inlet opening (56),
- a second conduction section (94) which is connected to the air outlet opening (58), and
- a third conduction section (96) received between and connected to the first and second conduction section (92, 94);
and wherein
- the heating element (110, 112; 210, 212) is received within the third conduction section (96);
**characterized in that**
- the heating module (12) has a sensor device (130) adapted to record the temperature of the air flowing through the heating module (12);
- the sensor device (130) is arranged within a sensor holder (128) held by a plurality of bars (102), and wherein the bars (102) substantially extend in a radial direction (RR) from the sensor holder (128); and
- some or all bars (102) have an air conduction channel (132) configured to direct passing air towards the sensor device (130).

2. The heating module according to claim 1, wherein some or all of the bars comprise a temperature-conducting material with a thermal conductivity greater than or equal to 15W/(m*K).

3. The heating module according to any one of the preceding claims, wherein the sensor device (130) is configured as a safety fuse (118) which reacts to exceeding a temperature.

4. The heating module according to any one of the preceding claims, wherein
- a plurality of temperature fuses (118) is arranged in the third conducting section (96),
- the heating element (110, 112; 210, 212) has a plurality of heating components (110, 112; 210, 212), and wherein
- each heating component (110, 112; 210, 212) is assigned a temperature fuse (118).

## Revendications

1. Module de chauffage (12) pour une installation de chauffage (10) d'un véhicule habitable comprenant
- un boîtier de module (36) comprenant une ouverture d'entrée d'air (56) et une ouverture de sortie d'air (58),
- un élément de guidage d'air (76) logé dans le carter de module (36), qui présente plusieurs sections de guidage (92, 94, 96) et qui est relié à l'ouverture d'entrée d'air (56) et l'ouverture de sortie d'air (58), et comprenant
- au moins un élément chauffant (110, 112 ; 210, 212), dans lequel l'élément chauffant (110, 112 ; 210, 212) est installé pour réchauffer l'air qui s'écoule de l'ouverture d'entrée d'air (56) à l'ouverture de sortie d'air (58) ;
dans lequel l'élément de guidage d'air (76) présente les sections de guidage suivantes :
- une première section de guidage (92) qui est reliée à l'ouverture d'entrée d'air (56),
- une deuxième section de guidage (94) qui est reliée à l'ouverture de sortie d'air (58), et
- une troisième section de guidage (96) qui est logée entre les première et deuxième sections de guidage (92, 94) et est reliée à celles-ci ;
et dans lequel
- l'élément chauffant (110, 112 ; 210, 212) est logé dans la troisième section de guidage (96);
**caractérisé en ce que**
- le module de chauffage (12) présente un dispositif à capteur (130) qui est installé pour capter la température de l'air traversant le module de chauffage (12) ;
- le dispositif à capteur (130) est disposé dans un logement de capteur (128) qui est tenu par plusieurs passerelles (102), et dans lequel les passerelles (102) s'étendent dans la direction radiale (RR) à partir du logement de capteur (128) ; et que
- quelques passerelles (102) ou toutes comportent un canal de guidage d'air (132) qui est formé de manière à conduire l'air traversant dans la direction du dispositif à capteur (130).

2. Module de chauffage selon la revendication 1, dans lequel quelques passerelles (102) ou toutes sont constituées d'un matériau thermiquement conducteur, d'une conductivité thermique supérieure ou égale à 15 W/(m*K).

3. Module de chauffage selon l'une des revendications précédentes, dans lequel le dispositif à capteur (130) est conformé en fusible (118) qui réagit au dépassement d'une température.

4. Module de chauffage selon l'une des revendications précédentes, dans lequel
- plusieurs protections thermiques (118) sont disposées dans la troisième section de guidage (96),
- l'élément chauffant (110, 112; 210, 212) présente plusieurs composants chauffants (110, 112 ; 210, 212), et dans lequel
- à chaque composant chauffant (110, 112 ; 210, 212) est associé une protection thermique (118).
